# EUROPEAN PATENT SPECIFICATION

(11) **EP 0 386 352 B1**
(45) Date of publication and mention of the grant of the patent: **09.03.1994**
(21) Application number: 89302284.8
(22) Date of filing: 07.03.1989
(51) Int. Cl.: C01B 3/36, C10J 3/46

(54) **Partial oxidation process**
Teiloxidationsverfahren
Procédé d'oxydation partielle

(43) Date of publication of application: 12.09.1990
(73) Proprietor: TEXACO DEVELOPMENT CORPORATION, White Plains, New York 10650 (US)
(72) Inventor: Najjar, Mitri Salim, Hopewell Junction, NY 12533 (US); Corbeels, Roger Jean, Wappingers Falls, NY 12590 (US)
(74) Representative: Ben-Nathan, Laurence Albert

(56) References cited:
- EP-A- 0 209 261
- US-A- 4 671 804
- US-A- 4 705 536
- US-A- 4 705 538
- US-A- 4 705 539
- US-A- 4 732 700
- US-A- 4 778 485
- US-A- 4 803 061

## Description

This invention relates to the partial oxidation ash-containing heavy liquid hydrocarbonaceous fuels, ash-containing petroeum coke, or mixtures thereof to produce gaseous mixture comprising H₂+CO and of sulfur and ash-containing heavy liquid hydrocarbonceous fuels, solid carbonaceous fuels, or mixtures thereof to produce gaseous mixtures comprising H₂+CO which are substantially free from molten slag and sulfur-containing gases.

More particularly it pertains to an additive system or an additive-refractory combination for removing nickel and vanadium-containing contaminants along with other molten ash components which are produced during the partial oxidation of a heavy liquid hydrocarbonceous fuel having a nickel and vanadium-containing ash, or a low-silicon heavy liquid hydrocarbonaceous fuel, and/or petroleum coke having a nickel and vanadium-containing ash to produce synthesis gas, reducing gas, or fuel gas.

It also pertains, more particularly to an additive system for in-situ desulfurization and simultaneous removal of nickel and vanadium-containing contaminants along with other molten ash components which are produced during the partial oxidation of heavy liquid hydrocarbonaceous fuel and/or solid carbonaceous fuel. Synthesis gas, reducing gas, or fuel gas may be thereby produced which are substantially free from molten ash and sulfur-containing gases.

The partial oxidation of liquid hydrocarbonaceous fuels such as petroleum products and slurries of solid carbonaceous fuels such as coal and petroleum coke are well known processes. However, troublesome molten slags are produced along with the product gas in the free-flow unobstructed vertical reaction zone of the partial oxidation gas generator. At the high temperatures e.g. about 1149°C to 1649°C (2100°F to 3000°F) prevailing the reaction zone, the highly corrosive molten slag attacks the refractory which lines the reaction zone. Lining failures have sometimes occurred within a few hundred hours. A compatible additive-refractory system is required wherein the molten slag is modified by contact with the refractory so that it runs more freely from the gasifier. The refractory lining should resist substantial corrosion, erosion, and chemical attack by the additive modified molten slag. Costly down-times for replacement of the refractory lining would thereby be avoided.

The Texaco partial oxidation gasification process offers an alternative processing route for the coke or the ash-containing heavy liquid hydrocarbonaceous fuel. For example, water slurries of petroleum coke are reacted by partial oxidation in coassigned U.S. Patent No. 3,607,157. Gasification is often cited as a convenient means of coke disposition. The decision to use gasification as a coke disposal means is generally based on economics. The expected rise in energy costs and the total use of feed crude should shortly bring about a great utilization of petroleum coke feeds to the partial oxidation gas generator.

Previous gasification runs with delayed coke and/or ash-containing heavy liquid hydrocarbonaceous fuel gave rise to some unexpected operating problems. The ash, which normally melts and is discharged from the gasifier as a slag, was not melting completely and being discharged but was building up on the ash in said materials collected on the gasifier walls and formed oxides during shut-down. Upon subsequent exposure of the gasifier walls to air these deposits involving vanadium can catch fire with vanadium converting to the lower melting V₂O₅ or metal vanadate states. The strong solvent action of vanadium oxide on the refractory lining contributed to the clogging of the outlet in the bottom of the gasifier. Nickel impurities may under certain conditions form troublesome nickel oxide and nickel sulfide downstream in the system. Fluxing as used in coal operations and in U.S. Patent Numbers 1,799,885 and 2,644,745 does not provide a solution to Applicant's problem involving troublesome vanadium and nickel. The subject invention is an improvement in the art since it permits long time operation of the partial oxidation gas generator without shut-down due to failure of the refractory lining in the reaction zone that was brought about by the presence of vanadium. Further, the product gas containing mixtures of H₂O+CO is produced containing substantially no corrosive sulfur-containing gases.

The foreseeable trend for petroleum reserves is that the produced crude will be increasingly heavier and of poorer quality. To compensate for this trend, refiners must employ more "bottom of the barrel" upgrading to provide the desired light products. The current industry workhouse to provide this upgrading is some type of coking operation (either delayed or fluid). A good deal of current refinery expansion includes the installation or expansion of coker units, and thus, coking will be process of general use for some time to come. Since the crudes more contaminants, i.e. sulfur, metals (predominately vanadium, nickel, and iron), and ash and these contaminants are concentrated in the product coke, this coke is of a much poorer quality and is excluded from its normal product applications. Because the crudes are heavier, i.e., contain more coke precursors, more of this poorer quality coke is produced from each barrel of ash-containing heavy liquid hydrocarbonaceous fuel. The manufacturers of petroleum coke pellets by a delayed coking process is described in coassigned U.S. Patent No. 3,673,080. A fluid coking process is described in U.S. Patent No. 2,709,676.

A major drawback for coking is the disposal of the product coke. With a reasonably clean coker feed, the product coke has been substituted for applications requiring only relatively pure carbon, such as electrode manufacture. However, with the feed crudes becoming poorer, there are compounding factors affecting coker operations. First, since the crudes contain more contaminants, i.e. sulfur, metals (predominately vanadium, nickel, and iron), and ash, and these contaminants are concentrated in the product coke, this coke is of a much poorer quality and is excluded from its normal product applications. Second, because the crudes are heavier, i.e., contain more coke precursors, more of this poorer quality coke is produced from each barrel of ash-containing heavy liquid hydrocarbonaceous fuel. The manufacture of petroleum coke pellets by a delayed coking process is described in coassigned U. S. Patent No. 3,673,080. A fluid coking process is described in U. S. Patent No. 2,709,676.

The Texaco partial oxidation gasification process offers an alternative processing route for the coke or the ash-containing heavy liquid hydrocarbonaceous fuel. For example, water slurries of petroleum coke are reacted by partial oxidation in coassigned U. S. Patent No. 3,607,157. Gasification is often cited as a convenient means of coke disposition. The Flexicoking Process is an integrated coker/gasifier operation but is often criticized because of the gasifier design. Further, no molten petroleum coke ash having a reduced ash fusion temperature is produced. The decision to use gasification as a coke disposal means is generally based on economics. The expected rise in energy costs and legislation (primarily Canadian) requiring total use of feed crude should shortly bring about a great utilization of petroleum coke feeds to the partial oxidation gas generator.

Previous gasification runs with delayed coke and ash-containing heavy liquid hydrocarboneous fuel gave rise to some unexpected operating problems. The ash, which normally melts and is discharged from the gasifier as a slag, was not melting completely and being discharged but was building up on the walls of the refractory. Vanadium and nickel constituents of the ash in said materials collected on the gasifier walls and formed oxides during shut-down. Upon subsequent exposure of the gasifier walls to air these deposits involving vanadium can catch fire with vanadium converting to the lower melting V₂O₅ or metal vanadate states. The strong solvent action of vanadium oxide on the refractory lining contributed to the clogging of the outlet in the bottom of the gasifier. Nickel impurities may under certain conditions form troublesome nickel carbonyl deposits downstream in the system. Fluxing as used in coal operations and in U.S. Patent Numbers 1,799,885 and 2,644,745 do not provide a solution to Applicants' problem involving troublesome vanadium and nickel.

Texaco EP-A-0,209,261 describes a partial oxidation process of feedstocks containing sulphur and having an ash containing nickel, vanadium and silicon. With low silicon feedstocks, an iron-containing additive is introduced into the reaction zone to produce a liquid phase washing agent to transport V-containing oxide laths and spinels and other ash out of the reaction zone. With high silicon feedstocks, an iron and calcium containing additive is introduced into the reaction zone. Separate portions of the additive (i) generate a liquid phase washing agent and (ii) combine with a portion of the Ni, Ca and Si to generate a liquid oxide-silicate fluxing phase that dissolves all the remaining portion of the V-containing oxide laths and spinels and other ash components.

The subject invention is an improvement in the art since it permits long time operation of the partial oxidation gas generator without shut-down due to failure of the refractory lining in the reaction zone that was brought about by the presence of vanadium.

Furthermore the expected rise in energy costs and the economic necessity for the total use of feed crude should shortly bring about a greater utilization of comparatively low cost sulfur and ash-containing heavy liquid hydrocarbonaceous fuel and solid carbonaceous fuel as feeds in the partial oxidation process for producing gaseous mixtures comprising H₂+CO. By the subject process, build-up of slag on the inside walls of the gasifier is substantially eliminated. Further, in-situ desulfurization is provided for by the process.

The invention provides a process for the production of gaseous mixtures comprising H₂+CO by the partial oxidation of a feedstock comprising a heavy liquid hydrocarbonaceous fuel having a nickel and vanadium-containing ash or petroleum coke having a nickel and vanadium-containing ash, or mixtures thereof, the process being in accordance with Claim 1.

Silicon-containing addition agents, including coal, will increase the ratio of second liquid phase washing agent to first liquid phase washing agent thereby more effectively washing the vanadium-bearing spinels from the gasifier.

In one embodiment, a mixture of heavy liquid hydrocarbonaceous fuel having a nickel and vanadium-containing ash and said iron-containing additive is fed to a coker to produce petroleum coke with a nickel and vanadium-containing ash, and with said additive being uniformly dispersed throughout. This petroleum coke is then reacted in the partial oxidation gas generator to produce synthesis gas, reducing gas, or fuel gas.

In another embodiment, a small amount of additional additive selected from the group of elements consisting of magnesium, chromium, and mixtures thereof in the form of compounds, such as oxides is introduced into the reaction zone. The magnesium and chromium further increase the life of the refractory lining.

In still another embodiment, formation of elemental iron in the reaction zone is prevented by introducing sufficient supplemental oxygen and/or sulfur into the reaction zone at a specified temperature in the reaction zone so as to keep the partial pressure of the oxygen and/or S₂ gas in the reaction zone slightly above that calculated by Formulae I and/or II, to be described later.

In an embodiment of the invention gaseous mixtures comprising H₂+CO by the partial oxidation of a feedstock may be produced by a process comprising a heavy liquid hydrocarbonceous fuel having a nickel and vanadium-containing ash, or a low silicon-containing petroleum coke having a nickel and vanadium-containing ash, or mixtures thereof. Further, said feedstock includes a minimum of 0.1 wt. % of sulfur and less than about 350 parts per million (ppm) of silicon; such as in the range of about 1.0 parts per million (ppm) to about 350 ppm of silicon; and said ash includes a minimum of 1.0 wt. % of vanadium, such as about 2.0 to 20 wt. % and a minimum of 1.0 wt. % of nickel, such as about 2.0 to 20 wt. %, and a minimum of 1.0 wt. % of nickel, such as about 2.0 to 5.0 wt. %. The process includes the steps of (1) mixing together an iron-containing additive with said feedstock; wherein the weight ratio of iron-containing additive to ash in the reaction zone in (2) is in the range of about 0.1-10.0 to 1.0, and there is at least 2 parts by weight of iron for each part by weight of vanadium; (2) reacting said mixture from (1) at a temperature in the range of 1149°C to 1649°C (2100°F to 3000°F) and about 56°C to 111°C (100°F to 200°F) above the fluid temperature of the slag, and a pressure in the range of about 2 to 250 atmospheres in a free-flow vertical refractory lined partial oxidation reaction zone of a gasifier with a free-oxygen containing gas in the presence of a temperature moderator and in a reducing atmosphere to produce a hot raw effluent gas stream comprising H₂ + CO molten slag; wherein said refractory lining comprises in weight percent: MgO 85 to 98, Fe₂O₃ 0.03 to 3.0; Al₂O₃ 0.02 to 2.0, CaO 0.1 to 10 and SiO₂ 0.02 to 2.0; and where in said reaction zone a first portion of said iron-containing additive combines with at least a portion of said nickel, iron, and sulfur constituents found in the feedstock and refractory components to produce a first liquid phase washing agent substantially comprising in wt. % iron about 40 to 80; nickel about 0.1 to 5; and sulfur about 10 to 32; and optionally a minor amount of at least one element selected from the group consisting of Al, Ca, V, Si, Ti, Mg, Mn, Na, K, and mixtures thereof, a second portion of said iron-containing additive combines with a least a portion of the silicon, aluminum, calcium, sodium, and/or potassium, and iron constituents found in the feedstock and refractory components to produce a second liquid phase washing agent substantially comprising in wt. % iron about 5 to 40; magnesium about 0.01 to 2.0; aluminum about 5 to 20; silicon about 20 to 50; calcium about 1.0 to 35; and sodium and/or potassium about 0.01 to 5; and wherein the first and second liquid phase washing agents collect and transport at least a portion of the vanadium-containing oxide laths and spinels and other ash and refractory components out of the reaction zone as said molten slag, and said molten slag combines with a portion of said refractory in the iron-containing additives to produce localized vanadium-containing spinels and contain substantially no interlocking laths; and (3) separating non-gaseous materials from said hot raw effluent gas stream.

In one embodiment, a mixture of heavy liquid hydrocarbonaceous fuel containing less than 350 ppm of silicon and having a nickel and vanadium-containing ash and said iron-containing additive is fed to a coker unit to produce petroleum coke with a nickel and vanadium-containing ash, and with said additive being uniformly dispersed throughout. This petroleum coke is then reacted in the partial oxidation gas generator to produce synthesis gas, reducing gas, or fuel gas.

In another embodiment, a small amount of an additional material selected from the group of oxides consisting of manganese, magnesium, and mixtures thereof is introduced into the reaction zone. These additional elements further increase life of the magnesia refractory by forming a spinel before the vanadium interacts with the refractory. Manganese oxide further increases the fluidity of the slag. These additional materials are provided in the total amount of about 1.0 to 10.0 wt. % of the iron-containing additive. There is no formation of elemental iron.

In further embodiments of the invention gaseous mixtures comprising H₂+CO by the partial oxidation of a feedstock may be produced by a process comprising a heavy liquid hydrocarbonaceous fuel having a nickel and vanadium-containing ash or petroleum coke having a nickel and vanadium-containing ash, or mixtures thereof. Further, said feedstock includes a minimum of 0.1 wt. % of sulfur and greater than about 7 ppm, such as about 10 parts per million (ppm) to about 70,000 ppm of silicon; say in the range of greater than about 350 ppm to about 10,000 ppm of silicon; and said ash includes a minimum of 2.0 wt. % of vanadium, and a minimum of 1.0 wt. % of nickel, such as 2.0 to 5.0 wt. %. The process includes the steps of (1) mixing together an iron-containing additive with said feedstock; wherein the weight ratio of iron-containing additive to ash in the reaction zone in (2) is in the range of about 0.1-10.0 to 1.0, and there is at least 2 parts by weight of iron for each part by weight of vanadium; (2) reacting said mixture from (1) at a pressure in the range of about 2 to 250 atmospheres in a down-flowing free-flow unobstructed refractory lined vertical partial oxidation reaction zone of a gasifier with a free-oxygen containing gas in a reducing atmosphere and in the presence of a gaseous slag fluidizing agent which is introduced at the top of the reaction zone in a sufficient amount so as to maintain a uniform temperature throughout the reaction zone in the range of about 1149°C to 1649°C (2100°F to 3000°F) and said gaseous slag fluidizing agent is selected from the group consisting of superheated steam, CO₂, and mixtures thereof, to produce a hot raw effluent gas stream comprising H₂ + CO and entrained molten slag; wherein an equilibrium oxygen concentration is provided in the gas phase in the reaction zone with a partial pressure in the range of about 1.18 x 10⁻¹³ to 5.64 x 10⁻⁹ atmospheres, an equilibrium sulfur concentration is provided in the gas phase in the reaction zone with a partial pressure in the range of about 2 x 10⁻⁶ to 2.12 x 10⁻⁴ atmospheres, the free O/C atomic ratio is in the range of about 0.6 to 1.6, the H₂O/liquid hydrocarbonaceous and/or solid carbonaceous fuel weight ratio is in the range of about 0.1 to 5.0, and about 90 to 99.9 wt. % of the carbon in said liquid hydrocarbonaceous fuel and/or solid carbonaceous fuel is converted into carbon oxides; and where in said reaction zone a first portion of said iron-containing additive combines with at least portion of said nickel, iron, and sulfur constituents found in the feedstock to produce a first liquid phase washing agent, a second portion of said iron-containing additive combines with at least a portion of the silicon, aluminum, calcium, sodium and/or potassium and iron constituents found in the feedstock to produce a second liquid phase washing agent; and wherein the first and second liquid phase washing agents collect and transport substantially all of the vanadium-containing oxide laths and spinels and other ash components and refractory out of the reaction zone, and there is substantially no build-up of slag on the inside walls of the reaction zone; and (3) separating nongaseous materials from said hot raw effluent gas stream. In a preferred embodiment, gaseous mixtures of H₂O and substantially all of the sulfur-containing gases produced in the process are recycled to the gas generator for use as at least a portion of the slag fluidizing agent.

In still another embodiment, a mixture of heavy liquid hydrocarbonaceous fuel having a nickel and vanadium-containing ash and said iron-containing additive is fed to a coker unit to produce petroleum coke with a nickel and vanadium-containing ash, and with said additive being uniformly dispersed throughout. This petroleum coke is then reacted in the partial oxidation gas generator to produce synthesis gas, reducing gas, or fuel gas.

The problem associated with slag-buildup on refractory walls of the partial oxidation gas generator, and others are minimized by the subject process in which the amount of slag containing vanadium constituents which remains in the reaction zone is substantially reduced or eliminated. Advantageously, the subject invention provides a gaseous slag fluidizing agent and an improved method of operation so that the molten slag flows freely by gravity out of the gasifier. Further, a means of introducing this addition agent into the system to give maximum effectiveness is provided. In addition, substantially all of the sulfur in the fuel is simultaneously removed along with the molten slag. In-situ desulfurization of the feedstock takes place in the gasifier so that the raw effluent gas may leave the gasifier containing less than about 1.00 mole %, such as less than about 0.6 mole %, of H₂S and COS.

### Disclosure of the Invention

The following description relates to a first embodiment of the invention.

The partial oxidation of heavy liquid hydrocarbonaceous fuel and petroleum coke are described respectively in coassigned U.S. Patent Numbers 4,411,670 and 3,607,156, which are incorporated herein by reference. Further, suitable free-flow refractory lined gas generators and burners that may be used in the production of synthesis gas, reducing gas, or fuel gas from these materials are also described in the aforesaid references. Advantageously, the subject process uses relatively inexpensive feedstocks comprising heavy liquid hydrocarbonceous fuel and/or petroleum coke feedstocks having nickel and vanadium-containing ashes. Further, said feedstock includes a minimum of 0.1 wt. % of sulfur, such as at least 2.0 wt. % sulfur; and greater than about 7 ppm, such as about 10 parts per million (ppm) to about 70,000 ppm of silicon, such as in the range of greater than about 350 ppm to about 10,000 ppm of silicon; and said ash includes a minimum of 2.0 wt. % of vanadium and, a minimum of 1.0 wt. % of nickel, such as about 2.0 to 5.0 wt. %.

By definition, the term heavy liquid hydrocarbonaceous material or fuel having a nickel and vanadium-containing ash is a petroleum or coal derived fuel selected from the group consisting of virgin crude, residua from petroleum distillation and cracking, petroleum distillate, reduced crude, whole crude, asphalt, coal tar, coal derived oil, shale oil, tar sand oil, and mixtures thereof.

By definition, the term petroleum coke having a nickel and vanadium-containing ash is petroleum coke made from ash containing heavy liquid hydrocarbonaceous fuel by conventional coking methods such as by the delayed or fluid coking process, such as described in coassigned U.S. Patent No. 3,673,080, which is incorporated herein by reference.

Closer study of the ashes derived from the partial oxidation, without an additive, of a feedstock comprising heavy liquid hydrocarbonaceous fuels and/or petroleum coke having nickel and vanadium-containing ashes shows that they are largely composed of oxide and sulfide compounds of vanadium, nickel, iron, along with some normally occurring mineral matter species. Vanadium-containing oxide laths are present including V, V+Ca, V+Fe, V+Al, and mixtures thereof. Vanadium-containing spinels are present of the spinel-type aluminate phases and may include metals selected from the group consisting of V, Fe, Cr, Al, Mg and mixtures thereof. The presence of abundant interlocking needle to lath-like crystals is the cause of the high viscosity of the slag.

The metals present in the ash provide a system that is significantly different from that occurring in coal. A further factor is that the total ash content of the petroleum coke or heavy liquid hydrocarbonaceous fuel may be only about one-half to 5 weight percent (wt.%), whereas coal typically contains 10-20 wt.% ash. The comparatively low ash concentration in petroleum coke and heavy liquid carbonaceous fuel may be the reason why the ash removal problem is only noticed after prolonged gasifier runs. The chance for effective ash and additive mixing that is necessary to wash the vanadium constituents out of the reaction zone or for effective fluxing is therefore greatly reduced.

It is theorized that in the heavy liquid hydrocarbonaceous material and petroleum coke systems, a good deal of the ash material is liberated as individual molecular species. This is because upon vacuum distillation or coking, the metallic species in the crude, which are generally presented as porphyrin type structures (metal atoms, oxides or ions thereof confined in an organic framework), are entrapped within the collapsed carbon matrix.

Problems arise when the heavy metal constituents build-up in the system. In particular, vanadium and nickel are known to accumulate on the walls of the refractory lined reaction zone of the partial oxidation gas generator and not flow smoothly from the gasifier under normal gasifier conditions. During shut down and subsequent exposure of the gasifier walls to air, these deposits involving vanadium can catch fire with the vanadium converting to the lower melting V₂O₅ or metal vanadate states. These materials prove to be very corrosive to refractory thereby decreasing the life of the refractory lining of the reaction zone. These problems and others are minimized by the subject process in which the amount of vanadium constituents remaining in the reaction zone are substantially reduced or eliminated.

This invention provides an improved iron-containing additive. Further, a means of introducing this addition agent into the system to give maximum effectiveness is provided.

The iron-containing additive comprises an iron compound, preferably iron oxide. In the reaction zone of the partial oxidation gas generator, a first portion of the additive combines with at least a portion, such as substantially all or a large fraction e.g. about 90 to 97 wt. of the nickel and about 30 to 90 wt. %, say about 50 to 70 wt. % of the iron and sulfur constituents found in the feedstock to produce a first low viscosity liquid phase washing agent or carrier. Minor amounts e.g. less than about 5 wt. % of the amount present in the feedstock, of other elements from the feedstock may be picked up by the first liquid phase washing agent and dissolved therein. Accordingly, a minor amount of at least one extraneous element selected from the group consisting of Al, Ca, V, Si, Ti, Mg, Mn, Na, K, and mixtures thereof may be present in the first liquid phase washing agent. A second portion of the iron-containing additive combines with at least a portion, such as substantially all or a large fraction e.g. about 40 to 100 wt. %, say about 70 to 90 wt. % of the silicon, aluminum, calcium, sodium and/or potassium, and a portion e.g. 5 to 70 wt. %, of the remainder of the iron constituents found in the feedstock to produce a second liquid phase washing agent. Any remaining iron may go to the vanadium-containing spinel phase. Minor amounts e.g. less than about 5 wt. % of the amount present in the feedstocks, of other elements from the feedstock may be picked up by the second liquid phase washing agent and dissolved therein. Accordingly, a minor amount of at least one extraneous element selected from the group consisting of Ni, V, S, Mg, Cr, and mixtures thereof may be present in the second liquid phase washing agent. Advantageously, by the subject process the S₂ potential in the gas and downstream gas cleaning costs are substantially reduced or possibly eliminated.

The relative proportion of first and second liquid phase washing agents present in the reaction zone depends on the temperature prevailing in the reaction zone and the materials present. An elemental analysis of the first liquid phase washing agent substantially comprises in wt. %: iron about 40 to 80, such as about 60 to 70; nickel about 0.1 to 5, such as about 1 to 10; and sulfur about 10 to 32, such as about 15 to 30. The extraneous elements which may be present in the first liquid phase washing agent in the reaction zone include in wt. % vanadium about 0.1 to 3, such as about 0.2 to 1.0; silicon about 0.01 to 3, such as about 0.5 to 1.5; and aluminum about 0.01 to 3, such as about 0.4 to 1.2. It was unexpectedly found that most of the nickel e.g. 99 wt. % or more goes into the first liquid phase washing agent. Accordingly, in one embodiment to insure the elimination of harmful nickel subsulfide, the amount of first liquid phase washing agent comprises at least about 5.0 wt. % (basis total amount of first and second washing agents). An elemental analysis of the second washing agent substantially comprises in wt. %: iron about 5 to 40, such as about 10 to 30; aluminum about 5 to 20, such as about 8 to 12; silicon about 20 to 50, such as about 30 to 40; calcium about 1.0 to 35, such as about 5 to 15; and sodium and/or potassium about 0.01 to 5, such as about 0.5 to 2. The extraneous elements which may be present in the second liquid phase washing agent in the reaction zone include in wt. % vanadium about 0.2 to 5, such as about 0.5 to 2; and sulfur about 0.01 to 1.5, such as about 0.1 to 1.0.

It was unexpectedly found that these liquid phase washing agents have strong wetting capabilities for the high temperature non-flowing vanadium-containing oxide laths and spinels. These washing agents function in a completely different manner than that of a fluxing additive which may be used for example to solubilize slag constituents in coal. For example, these washing agents do not solubilize the troublesome vanadium-containing oxide laths and spinels. Rather, they serve as carriers and wash them out of the reaction zone. These washing agents wash at least a portion, such as from about 40 to 100 wt. %, say about 60 to 80 wt. %, and preferably all of the vanadium-containing contaminants out of the reaction zone of the partial oxidation gas generator. The mixtures of the first and second liquid phase washing agent and vanadium oxide laths and spinels are referred to herein as slag. The vanadium-containing oxide laths and spinels contain (i) substantially all e.g. 80 to 99 wt. % or a large fraction e.g. 85 to 95 wt. % of the vanadium present in the feed; (ii) the remainder of the Fe, Al, Mg, Ti, and other minor impurities from the iron-containing additive and/or feedstock; and (iii) refractory components. The vanadium-containing oxide laths and spinels comprise about 1 to 10 wt. %, such as about 4 to 8 wt. % of vanadium oxide.

The first liquid phase washing agent is present in the amount of about 5 to 99.5 wt. %, (basis total weight of first and second washing agents), such as about 30 to 70 wt. %. The second liquid phase washing agent is present in the amount of about 0.5 to 95.0 wt % such as about 30 to 70 wt. %. The two liquid phase washing agents are substantially immiscible in each other. For example, the solubility of the first liquid phase washing agent in the second liquid phase washing agent is only about 0.05 to 2.0 wt. %, such as about 0.1 to 2.0 wt. %. Actually, with the exception of the vanadium-containing laths and spinels, the first liquid phase washing agent does a better job than the second liquid phase washing agent in washing out of the reaction zone the particulate matter entrained in the hot raw effluent gas stream from the reaction zone. In general, the vanadium-bearing spinels tend to concentrate in the second liquid phase washing agent rather than in the first liquid phase washing agent. In some cases when the amount of the second liquid phase washing agent is less than 10 wt. %, the vanadium-bearing spinels have been so abundant that they actually constitute a more or less continuous mass with the second liquid phase washing agent. It is apparent that the vanadium-bearing spinels form very early in the crystallization sequence. Further, they have very high melting points and the grains composed of major proportions of them are rigid to very viscous at very high temperatures. The first liquid phase washing agent in contrast with the second liquid phase washing agent, have much lower melting points, and much lower viscosities. However, they also contain very much less of the vanadium-containing spinels. For example, the melting point and viscosity of the first liquid phase washing agent are in the range of about 1038°C to 1204°C (1900°F to 2200 °F), and about 5 to 120 poises respectively; whereas, the melting point and viscosity of the second liquid phase washing agent are in the range of about 1177°C to 1357°C (2150 °F to 2475°F), and about 100 to 1200 poises, respectively.

In one embodiment, it was unexpectedly found that the proportion of second liquid phase washing agent may be increased from a value in the range of about 0.5 to 9.5 wt. % (basis total wt. of first and second liquid phase washing agents) to a value in the range of about 30 to 95 wt. % by the addition of a supplemental silicon-containing material to the feed mixture to the reaction zone. The concentration of vanadium-bearing spinels is thereby diluted so that their contribution to the viscosity is decreased. The spinels are thereby more effectively washed from the gasifier. The atomic ratio of Si/V in the feed to the gasifier may be increased from a normal value in the range of about 0.1 to 10, such as about 0.5 to 2.0, to an increased value in the range of about 5.0 to 100, such as about 20 to 50.

Suitable silicon-containing addition agents include materials selected from the group consisting of oxides and sulfides of silicon, coal, coal ash, tar sand, sand, rock, soil, earth, and mixtures thereof. For example, in one embodiment where the silicon containing addition agent is coal and petroleum coke is the fuel feed, sufficient coal is introduced into the reaction zone along with the petroleum coke to provide a weight ratio of coal ash in the range of about 0.1 to 100 for each part by wt. of petroleum coke ash, such as about 0.5 to 20 parts by weight of coal ash per part by wt. of petroleum coke ash. The coal and petroleum coke may be ground together and introduced into the reaction zone entrained in a liquid carrier e.g. water, CO₂, liquid hydrocarbonaceous fuel; or entrained in a gaseous carrier e.g. steam, CO₂, air, recycle synthesis gas and mixtures thereof. The coal serves as a carbonaceous fuel and as a source for supplemental silicon.

The distribution of iron between the first and second liquid phase washing agents is influenced by the partial pressures of the oxygen and/or S₂ gas in the reaction zone. The lower the partial pressure of oxygen and/or S₂ gas at a given temperature, the more iron is driven into the first liquid phase washing agent in preference to the second liquid phase washing agent. The formation of elemental iron in the reaction zone leads to difficulties with slag removal. In order to prevent elemental iron from forming, the partial pressure of the oxygen and/or S₂ gas in the reaction zone of the gasifier at a specific temperature is kept slightly above that calculated by Formulae I and/or II below.

The relationship between temperature in the reaction zone (T°C), and the common logarithm of the equilbrium partial pressure in atmospheres of oxygen log 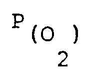
in the reaction zone is shown by Formula I. When the equilibrium partial pressure of oxygen in the reaction zone drops below that calculated in Formula I for the design temperature in the reaction zone, then sufficient supplemental free-oxygen containing gas is introduced into the reaction zone to restore the equilibrium partial pressure of the oxygen in the reaction zone to a value which is slightly above that calculated in Formula I. Additions of supplemental free-oxygen containing gas in excess of that required to do the job are economically unattractive. Further, they will reduce the efficiency of the process and should be avoided. 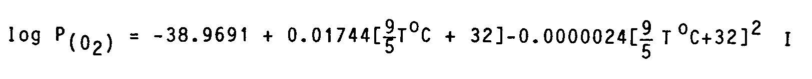
wherein: T is a value in the range of about 927°C to 1649°C (1700°F to 3000°F), such as about 1093°C to 1427°C (2000°F to 2600°F).

For example, when the temperature in the reaction zone is 1371°C (2500°F), a first value for the equilibrium partial pressure of oxygen in the reaction zone, as determined from Formula I, is 10 ^{-12.39} atmosphere. This value for the partial pressure of the oxygen in reaction zone is compared with a second value for the partial pressure of oxygen which is determined by conventional calculations for the reactions going on in the reaction zone of the gasifier. When the second value for the partial pressure in atmospheres of oxygen is less than the value calculated from Formula I then sufficient supplemental free-oxygen containing gas e.g. air, oxygen, oxygen-enriched air is introduced into the reaction zone to bring the partial pressure in atmospheres of oxygen to a value which is slightly above 10^{-12.39} atmospheres, such as to about 10⁻¹² atmospheres or above. The term "slightly above" means an increase of about 3%. Over the reaction temperature range of 927°C to 1649°C (1700 to 3000°F) and an atomic O/C ratio in the range of about 0.6 to 1.6, the equilibrium partial pressure in atmospheres of oxygen in the reaction zone will increase in range of about 1.18 x 10⁻¹³ to 5.64 x 10⁻⁹ atmospheres.

As previously mentioned, elemental iron may be prevented from forming in the reaction zone of the partial oxidation gas generator by maintaining the partial pressure of S₂ gas in the reaction zone above the value calculated from Formula II for the specified reaction zone temperature. The relationship between the temperature in the reaction zone (T°C), and the common logarithm of the equilibrium partial pressure of S₂ gas "log 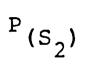
" is shown in Formula II. When the equilibrium partial pressure of the S₂ gas in the reaction zone drops below that calculated in Formula II for the design temperature in the reaction zone, than sufficient supplemental elemental sulfur or a sulfur-containing material is introduced into the reaction zone to bring the equilibrium partial pressure or the S₂ gas in the reaction zone to a value which is slightly above that calculated in Formula II. Additions of supplemental elemental sulfur or sulfur-containing materials in excess of that required to do the job are economically unattractive and should be avoided. Further, costly downstream purification steps for the S₂ gas may be then avoided. 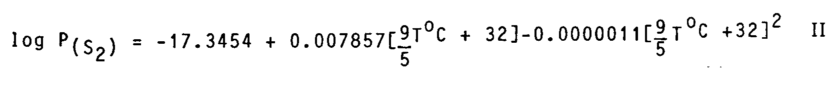
wherein: T is a value in the range of about 927°C to 1649°C (1700°F to 3000°F), such as about 1093°C to 1427°C (2000°F to 2600°F).

For example, when the temperature in the reaction zone is 1204°C (2200°F), the equilibrium partial pressure of S₂ gas in the reaction zone when calculated from Formula II is 10 ^{-5.28} atmosphere. This value for the partial pressure of S₂ gas in the reaction zone is compared with a second value for the partial pressure of S₂ gas which is determined by conventional calculations for the reactions going on in the reaction zone of the gasifier. When the second value for the partial pressure of S₂ gas is less than the value calculated from Formula II, then sufficient supplemental elemental sulfur or sulfur-containing material e.g. metal sulfides, H₂S, COS, SO₂ are introduced into the reaction zone to restore the equilibrium partial pressure of S₂ gas to a value which is slightly above 10^{-5.28} atmospheres, such as about 10⁻⁵ atmospheres. The term "slightly above" means an increase of about 3%.

In another embodiment, it was unexpectedly found that other benefits could be achieved by including in the iron-containing additive, an additional material selected from the group of elements consisting of magnesium, chromium, and mixtures thereof. The elements are provided as suitable compounds selected from the groups consisting of oxides, hydroxides, carbonates, bicarbonates, sulfates, nitrates and mixtures thereof. The total amount of the compounds of magnesium, chromium, and mixtures thereof in the additive may be in the range of about 1.0 to 10.0 wt. %, such as about 2.0 to 8.0 wt. % of the additive. The addition of the aforesaid supplemental amount of magnesium and/or chromium compound saturates the slag with respect to these constituents thereby preventing their dissolution from the refractory. The life of the refractory lining is thereby extended.

A suitable amount of iron-containing additive is introduced into the reaction zone along with the fuel feedstock in order to satisfy the following two ratios: (i) a wt. ratio of iron-containing additive to ash (noncombustable material) in the reaction zone in the range of about 0.1 - 10.0 to 1.0, such as in the range of about 1-6 to 1; and (ii) at least 2 parts by weight, such as about 10-30, say 20 parts by weight of iron for each part by weight of vanadium.

Advantageously by the subject process, the two washing phases of the molten slag which are produced in the reaction zone have low viscosities, e.g. less than 100 poise at 2500°F, in comparison with prior art high viscosity slag. This facilitates slag removal. Further, at shut-down of the gasifier, the refractory walls of the reaction zone are provided clean with substantially no net accumulation of vanadium contaminants.

The partial oxidation reaction takes place in a reducing atmosphere under the following conditions: temperature - 927°C to 1649°C (1700°F to 3000°F), such as about 1204°C to 1427°C (2200°F to 2600°F); say about 1496°C to 1552°C (2725°F to 2825°F); pressure - about 5 to 250 atmospheres, such as about 15 to 200 atmospheres; when steam or water is used as a temperature moderator, the H₂O/fuel weight ratio is in the range of about 0.1 to 5.0, such as about 0.2 to 0.9; and atomic ratio of free oxygen to carbon in the fuel (O/C ratio) is in the range of about 0.6 to 1.6, such as about 0.8 to 1.4.

The composition of the hot, raw effluent gas stream directly leaving the reaction zone of the free-flow partial oxidation gas generator is about as follows, in mole percent: H₂ 10 to 70, CO 15 to 57, CO₂ 0.1 to 25, H₂O 0.1 to 20, CH₄ nil to 60, H₂S nil to 2, COS nil to 0.1, N₂ nil to 60, and Ar nil to 2.0. Particulate carbon is present in the range of about 0.2 to 20 weight % (basis carbon content in the feed). Ash is present in the range of about 0.5 to 5.0 wt. %, such as about 1.0 to 3.0 wt. % (basis total weight of fuel feed). Depending on the composition after removal of the entrained particulate carbon and ash by quench cooling and/or scrubbing with water and with or without dewatering the gas stream may be employed as synthesis gas, reducing gas or fuel gas.

Another aspect of this invention is that the iron-containing additive may be selected on the basis of serendipitous catalytic properties in addition to its use in the generation of the washing agent, as previously described. For example, it may act to produce more and/or a better quality of light products from the coker operation. It may also aid in the gasification reactions either by increasing the reaction rate and thus the throughput capacity of the gasifier or by increasing the conversion of the soot and thus the overall efficiency of the process. Again, however, this invention does not depend on the catalytic properties of the iron-containing additive.

It was unexpectedly found that a preferred iron-containing additive for mixing with the heavy liquid hydrocarbonaceous material having a nickel and vanadium- containing ash or petroleum coke having a nickel and vanadium- containing ash is selected from the group consisting of elemental iron; iron compounds including oxides, sulfides, sulfates, carbonates, cyanides, chlorides, nitrates; and mixtures thereof. In another embodiment, the iron compound is a water soluble iron salt. In still another embodiment the iron compound is a ferro or ferri organic compound selected from the group consisting of naphthenates, oxalates, acetates, citrates, benzoates, oleates, tartrates, and mixtures thereof.

In one embodiment of the subject invention the aforesaid mixture of fuel feedstock comprising heavy liquid hydrocarbonaceous fuel having a nickel and vanadium-containing ash and/or the petroleum coke having a nickel and vanadium-containing ash, and the iron-containing additive are introduced into the partial oxidation gasifier. In another embodiment, the iron-containing additive is mixed with the heavy liquid hydrocarbonaceous material having a nickel and vanadium-containing ash and the mixture is then fed into a conventional coking unit to produce petroleum coke. By this means, the finely ground iron-containing additive may be intimately mixed throughout the petroleum coke product. The preferable particle size of the comminuted iron-containing additive and the comminuted petroleum coke is in the range of ASTM E-11 Standard Sieve Designation about 210 microns to 37 microns, or below. The ingredients of the aforesaid mixtures may be separately ground and then mixed together. Alternatively, the ingredients may be wet or dry ground together. Intimate mixing of the solid materials is thereby achieved, and the particle sizes of each of the solid materials in the mixture may be substantially the same. The dry ground mixture may be mixed with water or a liquid hydrocarbonaceous material or both to produce a pumpable slurry having a solids content in the range of about 50-65 wt.%. Alternatively, the solid materials may be wet ground with the liquid slurry medium. Alternatively, the mixture of particulate solids may be entrained in a gaseous medium and then introduced into the gas generator. The gaseous transport medium may be selected from the group consisting of steam, CO₂, N₂, free-oxygen containing gas, recycle synthesis gas, and mixtures thereof.

In the embodiment wherein ground iron-containing additive is mixed with the heavy liquid hydrocarbonaceous fuel having a nickel and vanadium-containing ash and fed into a coker, the iron-containing washing additive may be introduced directly into the ash- containing petroleum liquid feed to the vacuum distillation tower, which normally precedes the coker unit. In either unit operation (coking or distillation), substantially all of the iron-containing additive should stay behind in the desired bottoms stream. In other words, there should be little, if any, carry over of the additive with the lighter products. A possible advantage for mixing the additive with the vacuum tower feedstream in preference to the bottoms stream (i.e. coker feed) is that the feed to the vacuum tower is significantly less viscous than the bottoms from the vacuum tower. A more thorough mixing may be thereby effected.

For example, a mixture comprising a high boiling liquid petroleum i.e. heavy liquid hydrocarbonaceous fuel having a nickel and vanadium-containing ash and the comminuted iron-containing additive at a temperature in the range of about 343°C to 499°C (650°F to 930°F) is introduced into a delayed coking zone, for example by way of line 33, such as shown and described in coassigned U. S. Patent No. 3,673,080, which is incorporated herein by reference. At a temperature in the range of about 427°C to 479°C (800°F to 895°F) and a pressure in the range of about 20 to 60 psig, uncondensed hydrocarbon effluent vapor and steam are removed overhead and petroleum coke in admixture with iron-containing additive is removed from the bottom of said delayed coking zone.

In one embodiment, the petroleum coke in admixture with iron-containing additive is ground with coal which is introduced as a silicon-containing addition agent. The ground mixture is introduced into the partial oxidation reaction zone as the fuel feed. Sufficient coal is mixed with the petroleum coke to provide in the reaction zone a weight ratio of coal ash in the range of about 0.1 to 100 for each part by weight of petroleum coke ash.

In another embodiment, a mixture comprising a high boiling liquid petroleum having a nickel and vanadium- containing ash and the comminuted iron-containing additive at a temperature in the range of about 288°C to 399°C (550°F to 750°F) is introduced into a fluidized bed coking zone for example by way of line 31, such as shown and described in U. S. Patent No. 2,709,676, which is incorporated herein by reference. At a temperature in the range of about 538°C to 649°C (1000°F to 1200°F) and a pressure in the range of about 10 to 20 psig, uncondensed hydrocarbon effluent vapor and steam are removed overhead and said petroleum coke is removed from the bottom of said coking zone.

In other embodiments, this invention may be applied to other similar petroleum processes that produce a stream suitable for gasification. Any "bottom of the barrel" process that does not upgrade the bottoms or residue stream to extinction must ultimately produce such a stream. These streams, either liquid or normally solid but pumpable at elevated temperatures, will produce the same gasification problems as discussed for coke. Thus, the invention of introducing an iron-containing additive as part of the petroleum processing prior to gasification should, depending on the specific process, produce a feedstock that will be free of the gasification problems mentioned above. Most of these processes employ vacuum distillation as a pretreatment. Accordingly, as described above, the iron-containing addition agent may be mixed with the vacuum distillation feed having a nickel and vanadium-containing ash. The additive will then emerge from the distillation column in the bottoms stream. In turn, the bottoms stream is the feed stream for the upgrading process. This incorporation of the iron-containing additive should not adversely affect these processes, and the iron-containing addition agent should ultimately emerge with the vanadium-rich residue stream from each respective process. In all of these processes, this residue stream should be suitable for gasification by partial oxidation.

In still another embodiment of the invention, it was unexpectedly found that the softening temperature of the iron-containing addition agent could be reduced about 56°C to 167°C (100-300°F), such as about 111°C (200°F) by mixing a calcium compound with the previously described feedstock e.g. petroleum coke, liquid hydrocarbonaceous fuel, or mixtures thereof. The calcium compound may be selected from the group consisting of calcium oxide, calcium carbonate, calcium hydroxide, by adding calcium in this manner, the partial oxidation gas generator may be started up at a lower temperature e.g. about 111°C to 167°C (200°F to 300°F) lower. The calcium compound is temporarily introduced into the partial oxidation reaction zone at start-up in admixture with the feedstock and/or iron-containing addition agent in the critical amount of about 2.0 to 8.0 wt. % or below of the iron-containing addition agent. The calcium compound will lower the softening temperature of the iron-containing addition agent, thus enhancing the rate of sulfur pick-up in the slag. It was found that when the addition of calcium compound exceeded 8.0 wt. % of the iron-containing addition agent then calcium sulfide and calcium carbonate would clog up the central passage of the dip tube thereby blocking the discharge of the hot effluent gas stream from the reaction zone into the quench water.

Shortly after start-up when the sulfur begins to transfer into the molten slag, the liquid sulfide slag of iron and nickel will lower the softening temperature of the iron-containing agent thus eliminating thereafter the need of introducing calcium. Excess calcium will pick up the sulfur to form an undesirable viscous sulfide phase. Keeping the amount of calcium to 8.0 wt. % and below of the iron-containing addition agent will ensure the washing of the high melting calcium sulfide phase with the high melting vanadium laths and spinels. The use of calcium in this manner in admixture with the iron-containing additive is substantially different from its use as an ash fluxant, as described in coassigned U.S. Patent No. 4,277,365.

### EXAMPLE

The following examples are offered as a better understanding of the present invention, but the invention is not to be construed as limited thereto.

### EXAMPLE I

Synthesis gas substantially comprising in mole % dry basis H₂ 25 to 45, CO 20 to 50, CO₂ 5 to 35, CH₄ 0.06 to 8.0, and COS + H₂S 0.1 to 2.0 is produced in a free-flow refractory lined partial oxidation reaction zone, such as that shown and described in coassigned U. S. Patent No. 3,607,157, which is incorporated herein by reference. The feedstock comprises an atomized aqueous dispersion or a dispersion of substantially dry petroleum coke having a nickel and vanadium-containing ash and being entrained in a gaseous transport medium comprising a mixture of free-oxygen containing gas and/or steam. The petroleum coke feedstock contains about 3.2 wt. % of sulfur and about 1000 ppm of silicon. The ash in the petroleum coke comprises about 12.0 wt. % of vanadium, and about 5.0 wt. % of nickel. The petroleum coke also has uniformly dispersed therein an iron-containing additive comprising about 100 wt.% of iron oxide. The wt. ratio of iron-containing additive to ash is about 5 to 1. The weight ratio of iron to vanadium in the reaction zone is about 16 to 1. In another run the petroleum coke having a nickel and vanadium-containing ash and being in admixture with an iron oxide additive is introduced into the free-flow partial oxidation zone as a pumpable slurry of petroleum coke in water. The solids content of the slurry is about 60 weight percent.

The petroleum coke is reacted with a free-oxygen containing gas e.g. air, oxygen-enriched air, substantially pure oxygen, in the presence of a temperature moderator e.g. H₂O, CO₂, N₂, in the refractory lined partial oxidation reaction zone at an autogenous temperature of about 1510°C (2750°F) and a pressure of about 6 atmospheres. The molten slag droplets are readily separated from the hot effluent gas stream leaving the reaction zone by gravity or by quenching and/or scrubbing the gas stream with water or other gas scrubbing medium. The ash fusion temperature for the first liquid phase washing agent and associated ash is below 1149°C (2100°F). The fusion temperature for the second liquid phase washing agent and associated ash is below 1399°C (2550°F). In comparison, the ash fusion of the coarse slag with no iron-containing additive is greater than 1510°C (2750°F).

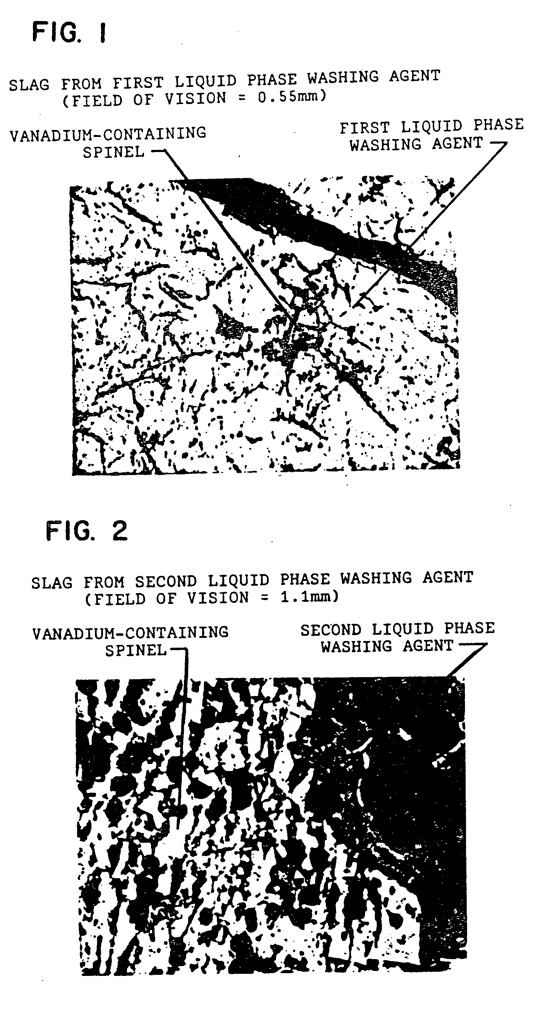

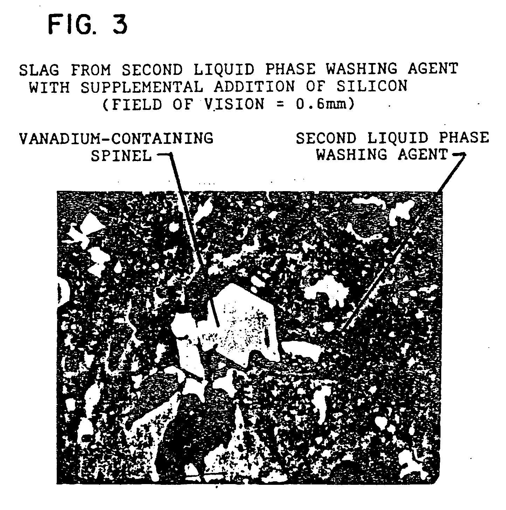

An elemental analysis of the components in a typical slag is shown in Table I below. Photomicrographs of cross-sections of typical slags produced from the first and second liquid phase washing agents and illustrating the undissolved vanadium-containing oxide spinels in a matrix of liquid phase washing agents are shown in the drawings for Figures 1 to 3.

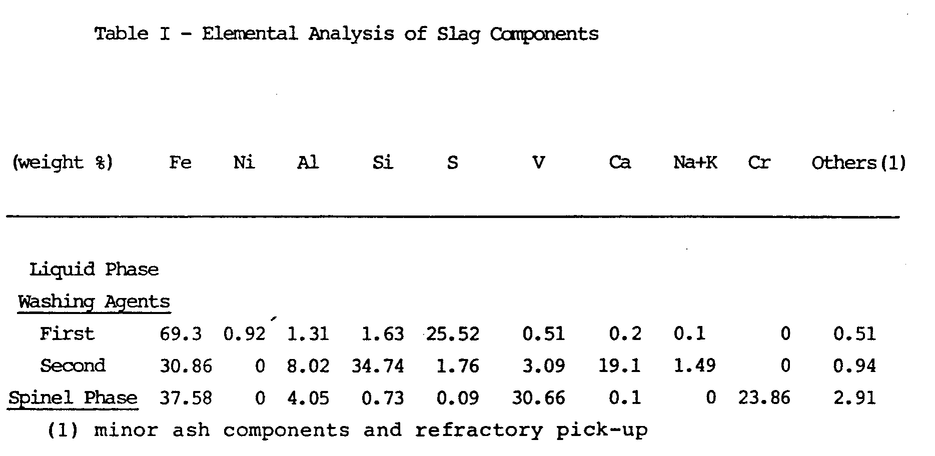

### EXAMPLE II

The process described in Example I was repeated in substantially all respects but with the addition of supplemental amount of silicon to the petroleum coke feedstock. SiO₂ was added in the amount of 1.6 times the amount of ash in the petroleum coke feedstock. There was substantially no effect on the composition and the ash fusion temperature by the addition of this supplementary amount of silica. The elemental analysis of the second liquid phase washing agent was as follows in weight % Fe 31.89, Ni O, Al 10.45, Si 45.65, S 1.34, V 0.95, Ca 5.57, Na+K 2.66, minor ash components and refractory pick-up 1.49. The proportion of second liquid phase washing agent to first liquid phase washing agent is increased. There was a dilution in concentration of vanadium-rich spinels in the slag. The ash fusion temperature of the second liquid phase washing agent slag was reduced to below 1218°C (2225°F); and, the slag viscosity in comparison with that of the second liquid phase washing agent in Example I decreased.

Another embodiment of a process according to the invention uses relatively inexpensive feedstocks comprising heavy liquid hydrocarbonaceous fuel and/or petroleum coke feedstocks having nickel and vanadium-containing ashes. Further, said feedstock includes a minimum of 0.1 wt. % of sulfur, such as at least 2.0 wt. % sulfur; and less than about 350 ppm, such as about 1.0 ppm to about 350 ppm of silicon; and said ash includes a minimum 1.0 wt. % of vanadium, such as about 2.0 to 10.0 wt. %; and a minimum of 1.0 wt. % of nickel, such as about 2.0 to 5.0 wt. %. The present embodiment is generally in accordance with the first embodiment. Specific differents will be described below. The present embodiment makes use of a unique magnesia refractory lining whereby the reaction zone withstands attack from the corrosive molten slag.

This embodiment pertains to the partial oxidation of a low silicon-containing heavy liquid hydrocarbonaceous fuel and/or petroleum coke, and provides an improved combination of iron-containing additive and refractory lining in the material oxidation reaction zone. Further, a means of introducing this addition agent into the system to give maximum effectiveness is provided.

The high magnesium oxide (e.g. greater than 85 wt. % MgO) refractory lining the partial oxidation reaction zone has the following composition in wt. %: MgO 85 to 98, Fe₂O 0.03 to 3.0, Al₂O₃ 0.02 to 2.0, CaO 0.01 to 10, and SiO₂ 0.02 to 2.0. The price of this magnesia refractory is comparable to alumina rich refractories (e.g. ruby bricks). Further, it is much cheaper than chromomagnesite refractories. A fused cast refractory is preferred. While fused casts are more expensive and less resistant to thermal cracking, they offer reduced tendency for slag penetration.

The iron-containing additive comprises an iron compound, preferably iron oxide. The iron-containing additive may comprise about 30.0 to 100.0 wt. % of an iron compound. In the reaction zone of the partial oxidation gas generator, a first portion e.g. 10 to 99 wt. % of the additive combines with at least a portion, such as substantially all or a large fraction e.g. about 90 to 97 wt. of the nickel and about 30 to 90 wt. %, say about 50 to 70 wt. % of the iron, and sulfur constituents found in the feedstock to produce a first low viscosity liquid phase washing agent or carrier. Minor amounts e.g. less than about 5 wt. % of the amount present in the feedstock, of other elements from the feedstock may be picked up by the first liquid phase washing agent and dissolved therein. Accordingly, a minor amount of at least one extraneous element selected from the group consisting of Al, Ca, V, Si, Ti, Mg, Mn, Na, K, and mixtures thereof may be optionally present in the first liquid phase washing agent. A second portion of the iron-containing additive combines with at least a portion, such as substantially all or a large fraction e.g. about 40 to 100 wt. %, say about 70 to 90 wt. % of the silicon, aluminum, calcium, sodium and/or potassium, and a portion e.g. 5 to 70 wt. %, of the remainder of the iron constituents found in the feedstock to produce a second liquid phase washing agent. Any remaining iron may go to the vanadium-containing spinel phase. Minor amounts e.g. less than about 5 wt. % of the amount present in the feedstocks, of other elements from the feedstock may be picked up by the second liquid phase washing agent and dissolved therein. Accordingly, a minor amount of at least one extraneous element selected from the group consisting of Ni, V, S, Mg, Cr, and mixtures thereof may be present in the second liquid phase washing agent. Advantageously, by the present process the sulfur content in the gas, and the downstream gas cleaning costs are substantially reduced or possibly eliminated. Further, in one embodiment substantially all of the sulfur in the feedstock is converted into the sulfide of iron and nickel and leaves the reaction zone in the slag.

The relative proportion of first and second liquid phase washing agents present in the reaction zone depends on the temperature prevailing in the reaction zone and the materials present. An elemental analysis of the first liquid phase washing agent substantially comprises in wt. % iron about 40 to 80, such as about 60 to 70; nickel about 0.1 to 5, such as about 1 to 10; and sulfur about 10 to 32, such as about 15 to 30. A minor amount of at least one of the following extraneous elements may be optionally present in the first liquid phase washing agent in the reaction zone in wt. %: vanadium about 0.05 to 5.0, such as about 0.2 to 2.0; silicon about 0.1 to 5.0, such as about 0.3 to 1.0; magnesium about 0.1 to 6.0; and aluminum about 0.01 to 1.0, such as about 0.1 to 0.3. It was unexpectedly found that most of the nickel e.g. 99 wt. % or more goes into the first liquid phase washing agent. Accordingly, in one embodiment to insure the elimination of harmful nickel subsulfide, the amount of the first liquid phase washing agent comprises at least about 5.0 wt. % (basis total amount of first and second washing agents). An elemental analysis of the second washing agent substantially comprises in wt. %: iron about 5 to 40, such as about 10 to 30; magnesium about 0.01 to 2.0; aluminum about 5 to 20, such as about 8 to 12; silicon about 20 to 50, such as about 30 to 40; calcium about 1.0 to 35, such as about 5 to 15; and sodium and/or potassium about 0.01 to 5, such as about 0.5 to 1.0. The extraneous elements which may be present in the second liquid phase washing agent in the reaction zone include in wt. % vanadium about 0.2 to 5.0, such as about 0.5 to 2.0; and sulfur about 0.01 to 1.5, such as about 0.1 to 1.0.

It was unexpectedly found that these liquid phase washing agents have strong wetting capabilities for the magnesia refractory lining and the high temperature non-flowing vanadium-containing oxide laths and spinels in the reaction zone. These washing agents function in a completely different manner than that of a fluxing additive which may be used for example to solubilize slag constituents in coal. For example, these washing agents do not solubilize the troublesome vanadium-containing oxide laths and spinels. Rather, they serve as carriers and wash them out of the reaction zone. These washing agents wash at least a portion, such as from about 60 to 100 wt. %, say about 70 to 90 wt. %, and preferably all of the vanadium-containing contaminants out of the reaction zone of the partial oxidation gas generator. The mixtures of the first and second liquid phase washing agent and vanadium oxide laths and spinels are referred to herein as slag. Combined with the molten slag in the amount of about 1.0 wt. % is a small portion of the magnesia lining from the reaction zone. The vanadium-containing oxide laths and spinels contain (i) substantially all e.g. 80 to 99 wt. % or a large fraction e.g. 85 to 95 wt. % of the vanadium present in the feed; (ii) the remainder of the Fe, Al, Mg, Ti and other minor impurities from the iron-containing additive and/or feedstock; and (iii) refractory components. the vanadium-containing oxide laths and spinels comprise about 1 to 10 wt. %, such as about 1 to 8 wt. % of vanadium oxide.

The first liquid phase washing agent is present in the amount of about 90 to 99.5 wt. %, (basis total weight of first and second washing agents), such as about 92 to 96 wt. %. The second liquid phase washing agent is present in the amount of about 0.5 to 10.0 wt. % such as about 1 to 2 wt. %. The two liquid phase washing agents are substantially immiscible in each other. For example, the solubility of the first liquid phase washing agent in the second liquid phase washing agent is only about 0.05 to 2.0 wt. %. Actually, with the exception of the vanadium-containing laths and spinels, the first liquid phase washing agent does a better job than the second liquid phase washing agent in washing out of the reaction zone the particulate matter entrained in the hot raw effluent gas stream from the reaction zone. In general, the vanadium-bearing spinels tend to concentrate in the second liquid phase washing agent rather than in the first liquid phase washing agent. In some cases when the amount of the second liquid phase washing agent is less than 1.0 wt. %, the vanadium-bearing spinels have been so abundant that they actually constitute a more or less continuous mass with the second liquid phase washing agent. It is apparent that the vanadium-bearing spinels form very early in the crystallization sequence. Further, they have very high melting points and the grains composed of major proportions of them are rigid to very viscous at very high temperatures. The first liquid phase washing agent, in contrast with the second liquid phase washing agent, has a much lower melting point, and a much lower viscosity. However, it also contains very much less of the vanadium-containing spinels. For example, the melting point and viscosity of the first liquid phase washing agent are in the range of about 1038°C to 1204°C (1900 to 2200°F), and about 5 to 120 poises respectively; whereas, the melting point and viscosity of the second liquid phase washing agent are in the range of about 1177°C to 1357°C (2150 to 2475°F), and about 100 to 1200 poises, respectively.

The distribution of iron between the first and second liquid phase washing agents is influenced by the partial pressures of the oxygen and/or S₂ gas in the reaction zone. The lower the partial pressure of oxygen and/or S₂ gas at given temperature, the more iron is driven into the first liquid phase washing agent in preference to the second liquid phase washing agent. The formation of elemental iron in the reaction zone leads to difficulties with slag removal. In order to prevent elemental iron for forming, the partial pressure in atmospheres of the oxygen and/or S₂ gas in the reaction zone of the gasifier at a specific temperature is kept slightly above that calculated by Formulae I and/or II below.

The relationship between temperature in the reaction zone (T°C), and the common logarithm of the equilibrium partial pressure of oxygen log 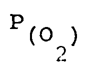
in atmospheres in the reaction zone is shown by Formula I. When the equilibrium partial pressure of oxygen in the reaction zone drops below that calculated in Formula I for the design temperature in the reaction zone, then sufficient supplemental free-oxygen containing gas is introduced into the reaction zone to restore the equilibrium partial pressure of the oxygen in the reaction zone to a value which is slightly above that calculated in Formula I. Additions of supplemental free-oxygen containing gas in excess of that required to do the job are economically unattractive. Further, they will reduce the efficiency of the process and should be avoided. 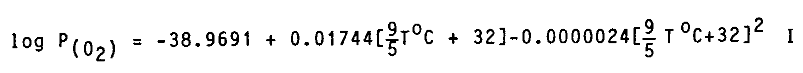
wherein: T is a value in the range of about 1149°C to 1649°C (2100°F to 3000°F).

For example, when the temperature in the reaction zone is 2100°F, a first value for the equilibrium partial pressure of oxygen in the reaction zone, as determined from Formula I, is 1.18 x 10⁻¹³ atmospheres. This value for the partial pressure of the oxygen in reaction zone is compared with a second value of the partial pressure of oxygen which is determined by conventional calculations of the reactions going on in the reaction zone of the gasifier. When the second value for the partial pressure of oxygen is less than the value calculated from Formula I then sufficient supplemental free-oxygen containing gas e.g. air, oxygen, oxygen-enriched air is introduced into the reaction zone to bring the partial pressure of oxygen to a value which is slightly above 1.18 x 10⁻¹³ atmospheres, such as to about 10⁻¹² atmospheres or above. The term "slightly above" means an increase of about 3%. Over the reaction temperature range of 1149°C to 1649°C (2100 to 3000°F) and an atomic O/C ratio in the range of about 0.6 to 1.6, the equilibrium partial pressure of oxygen in the reaction zone will increase in the range of about 1.18 x 10⁻¹³ to 5.64 x 10⁻⁹ atmospheres.

As previously mentioned, elemental iron may be prevented from forming in the reaction zone of the partial oxidation gas generator by maintaining the partial pressure of S₂ gas in the reaction zone above the value calculated from Formula II below for the specified reaction zone temperature. The relationship between the temperature in the reaction zone (T°C), and the common logarithm of the equilibrium partial pressure of S₂ gas "log 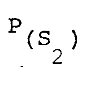
" in atmospheres is shown in Formula II. When the equilibrium partial pressure of the S₂ gas in the reaction zone drops below that calculated in Formula II for the design temperature in the reaction zone, than sufficient supplemental elemental sulfur or a sulfur-containing material is introduced into the reaction zone to bring the equilibrium partial pressure of the S₂ gas in the reaction zone to a value which is slightly above that calculated in Formula II. Additions of supplemental elemental sulfur or sulfur-containing materials in excess of that required to do the job are economically unattractive and should be avoided. Further, costly downstream purification steps for the S₂ gas may be then avoided. 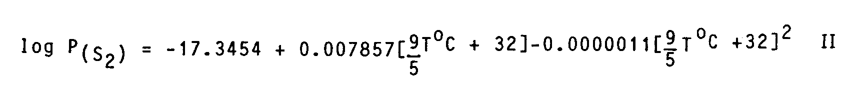
wherein: T is a value in the range of about 1149°C to 1649°C (2100°F to 3000°F).

For example, when the temperature in the reaction zone is 1149°C (2100°F), the equilibrium partial pressure of S₂ gas in the reaction zone when calculated from Formula II is 2 x 10⁻⁶ atmospheres. This value for the partial pressure of S₂ gas in the reaction zone is compared with a second value for the partial pressure of S₂ gas which is determined by conventional calculations for the reactions going on in the reaction zone of the gasifier. When the second value for the partial pressure of S₂ gas is less than the value calculated from Formula II, then sufficient supplemental elemental sulfur or sulfur-containing material e.g. metal sulfides, H₂S, COS, SO₂ are introduced into the reaction zone to restore the equilibrium partial pressure of S₂ gas to a value which is slightly above 2 x 10⁻⁶ atmospheres, such as about 10⁻⁵ atmospheres. The term "slightly above" means an increase of about 3%. Over the reaction temperature range of 2100 to 3000°F, the equilibrium partial pressure of sulfur in the reaction zone will increase in the range of about 2 x 10⁻⁶ to 2.12 x 10⁻⁴ atmospheres.

In another embodiment, it was unexpectedly found that other benefits could be achieved by including in the iron-containing additive, an additional material selected from the group of elements consisting of magnesium, manganese, and mixtures thereof. The elements are provided as suitable compounds selected from the groups consisting of oxides, hydroxides, carbonates, bicarbonates, sulfates, nitrates and mixtures thereof. The total amount of said additional materials may be in the range of about 1.0 to 10.0 wt. %, such as about 2.0 to 8.0 wt. % of the iron-containing additive. The addition of the aforesaid supplemental amount of materials saturates the slag with respect to these constituents thereby preventing their dissolution from the refractory. The life of the refractory lining is thereby extended.

A suitable amount of iron-containing additive is introduced into the reaction zone along with the fuel feedstock in order to satisfy the following two ratios: (i) a wt. ratio of iron-containing additive to ash (noncombustible material) in the reaction zone in the range of about 0.1 - 10.0 to 1.0, such as in the range of about 1-6 to 1; and (ii) at least 2 parts by weight, such as about 10-30, say 20 parts by weight of iron for each part by weight of vanadium.

Advantageously by the subject process, the two washing phases of the molten slag which are produced in the reaction zone have low viscosities, in comparison with prior art high viscosity slag. This facilitates slag removal. Further, at shut-down of the gasifier, the inside surfaces of the top dome and refractory walls of the reaction zone may be provided clean and with substantially no accumulation of vanadium contaminants.

The partial oxidation reaction takes place in a reducing atmosphere under the following conditions: temperature about 1204°C to 1649°C (2200°F to 3000°F), such as about 1260°C to 1427°C (2300°F to 2600°F); say about 1496°C to 1552°C (2725°F to 2825°F). Further, the temperature in the reaction zone is 56 to 111°C (100°F to 200°F) above the fluid temperature of the slag; pressure is about 2 to 250 atmospheres; H₂O/fuel weight ratio is in the range of about 0.1 to 5.0; such as about 0.2 to 0.9; and atomic ratio of free oxygen to carbon in the fuel (O/C ratio) is in the range of about 0.6 to 1.6, such as about 0.8 to 1.4.

The composition of the hot, raw effluent gas stream directly leaving the reaction zone of the free-flow partial oxidation gas generator is about as follows, in mole percent: H₂ 10 to 70, CO 15 to 57, CO₂ 0.1 to 30, H₂O 0.1 to 20, CH₄ nil to 60, H₂S nil to 0.5, COS nil to 0.05, N₂ nil to 60, and Aᵣ nil to 2.0. Particulate carbon is present in the range of about 0.2 to 20 weight % (basis carbon content in the feed). Ash is present in the range of about 0.5 to 5.0 wt. %, such as about 1.0 to 3.0 wt. % (basis total weight of fuel feed). Depending on the composition after removal of the entrained particulate carbon and ash by quench cooling and/or scrubbing with water and with or without dewatering, the gas stream may be employed as synthesis gas, reducing gas or fuel gas.

Another aspect of this invention is that the iron-containing additive may be selected on the basis of serendipitous catalytic properties during coking in addition to its use in the generation of the washing agent during gasification, as previously described. For example, it may act to produce more and/or a better quality of light products from the coker operation. It may also aid in the gasification reactions either by increasing the reaction rate and thus the throughput capacity of the gasifier or by increasing the conversion of the soot and thus the overall efficiency of the process. Again, however, this invention does not depend on the catalytic properties of the iron-containing additive.

It was unexpectedly found that a preferred iron-containing additive for mixing with the heavy liquid hydrocarbonaceous material containing low silicon and having a nickel and vanadium-containing ash or petroleum coke containing low silicon and having a nickel and vanadium-containing ash is selected from the group consisting of elemental iron; iron compounds including oxides, sulfides, carbonates, cyanides, nitrates; and mixtures thereof. In another embodiment, the iron compound is a water sobuble iron salt. In still another embodiment, the iron compound is a ferro or ferri organic compound selected from the group consisting of naphthenates, oxalates, acetates, citrates, benzoates, oleates, tartrates, and mixtures thereof.

In one embodiment of the subject invention the aforesaid mixture of fuel feedstock and the iron-containing additive are introduced into the partial oxidation gasifier. In another embodiment, the iron-containing additive is mixed with the heavy liquid hydrocarbonaceous material containing low silicon and having a nickel and vanadium-containing ash and the mixture is then fed into a conventional coking unit to produce petroleum coke. By this means, the finely ground iron-containing additive may be intimately mixed throughout the petroleum coke product. The preferable particle size of the comminuted iron-containing additive and the comminuted petroleum coke is in the range of ASTM E-11 Standard Sieve Designation about 210 microns to 37 microns, or below. The ingredients of the aforesaid mixtures may be separately ground and then mixed together. Alternatively, the ingredients may be wet or dry ground together. Intimate mixing of the solid materials is thereby achieved, and the particle sizes of each of the solid materials in the mixture may be substantially the same. The dry ground mixture may be mixed with water or a liquid hydrocarbonaceous materials or both to produce a pumpable slurry having a solids content in the range of about 50-65 wt. %. The slurry is then gasified by partial oxidation in the manner previously described. Alternatively, the solid materials may be wet ground with the liquid slurry medium. Alternatively, the mixture of particulate solids may be entrained in a gaseous medium and then introduced into the partial oxidation gas generator. The gaseous transport medium may be selected from the group consisting of steam, CO₂, N₂ free-oxygen containing gas, recycle synthesis gas, and mixtures thereof.

For example, a mixture comprising a high boiling liquid petroleum containing low silicon e.g. heavy liquid hydrocarbonaceous fuel containing low silicon and having a nickel and vanadium-containing ash and the comminuted iron-containing additive at a temperature in the range of about 343°C to 499°C (650°F to 930°F) is introduced into a delayed coking zone, for example, by way of line 33, such as shown and described in coassigned U.S. Patent No. 3,673,080, which is incorporated herein by reference. At a temperature in the range of about 427°C to 479°C (800°F to 895°F) and a pressure in the range of about 20 to 60 psig, uncondensed hydrocarbon effluent vapor and steam are removed overhead and petroleum coke in admixture with iron-containing additive is removed from the bottom of said delayed coking zone.

In one embodiment, a mixture comprising a high boiling liquid petroleum containing low silicon and having a nickel and vanadium-containing ash, and the comminuted iron-containing additive at a temperature in the range of about 288°C to 399°C (550°F to 750°F) is introduced into a fluidized bed coking zone for example by way of line 31, such as shown and described in U.S. Patent No. 2,709,676, which is incorporated herein by reference. At a temperature in the range of about 538°C to 649°C (1000°F to 1200°F) and a pressure in the range of about 10 to 20 psig, uncondensed hydrocarbon effluent vapor and steam are removed overhead and said petroleum coke is removed from the bottom of said coking zone.

In other embodiments, this invention may be applied to other similar petroleum processes that produce a stream suitable for gasification. Any "bottom of the barrel" process that does not upgrade the bottoms or residue stream to extinction must ultimately produce such a stream. These streams, either liquid or normally solid but pumpable at elevated temperatures, will produce the same gasification problems discussed for coke. Thus, the invention of introducing an iron-containing additive as part of the petroleum processing prior to gasification should, depend on the specific process, produce a feedstock that will be free of the gasification problems mentioned above. Most of these processes employ vacuum distillation as a pretreatment. Accordingly, as described above, the iron-containing addition agent may be mixed with the vacuum distillation feed having a nickel and vanadium-containing ash. The additive will then emerge from the distillation column in the bottoms stream. In turn, the bottoms stream is the feed stream for the upgrading process. This incorporation of the iron-containing additive should not adversely affect these processes, and the iron-containing addition agent should ultimately emerge with the vanadium-rich residue stream from each respective process. In all of these processes, this residue stream should be suitable for gasification by partial oxidation.

### EXAMPLES

The following examples are offered as a better understanding of the present invention, but the invention is not to be construed as limited thereto.

Synthesis gas is produced in a vertical free-flow unobstructed refractory lined partial oxidation reaction zone, such as that shown and described in coassigned U.S. Patent No. 3,607,157, which is incorporated herein by reference. The feedstock comprises an atomized aqueous dispersion of petroleum coke having a nickel and vanadium-containing ash. The petroleum feedstock contains about 3.2 wt % of sulfur and less than 350 ppm of silicon. The ash in the petroleum coke comprises about 12.0 wt. % of vanadium, and about 5.0 wt. % of nickel. The petroleum coke also has uniformly dispersed therein an iron-containing additive comprising about 100 wt. % of iron oxide. The wt. ratio of iron-containing additive to ash is about 5 to 1. The weight ratio of iron to vanadium in the reaction zone is about 16 to 1. The solids content of the slurry is about 60 wt. %.

The petroleum coke is reacted with a free-oxygen containing gas e.g. air, oxygen-enriched air, substantially pure oxygen, in the presence of a temperature moderator e.g. H₂O, CO₂, N₂ in the refractory lined partial oxidation reaction zone at an autogenous temperature of about 1343°C (2450°F) and a pressure of about 6 atmospheres. The molten slag droplets are readily separated from the hot effluent gas stream leaving the reaction zone by gravity or by quenching and/or scrubbing the gas stream with water or other gas scrubbing medium. The ash fusion temperature for the first liquid phase washing agent and associated ash is below 1149°C (2100°F). The ash fusion temperature for the second liquid phase washing agent and associated ash is below 2250°F. In comparison with tests run with commercially available refractories, including alumina base refractory, the slag generated from the aforesaid gasification shows the least attack on high MgO refractory comprising in wt. %: 92% MgO, 0.3% Fe₂O₃, 0.2% Al₂O₃, 1% CaO, and 0.2% SiO₂.

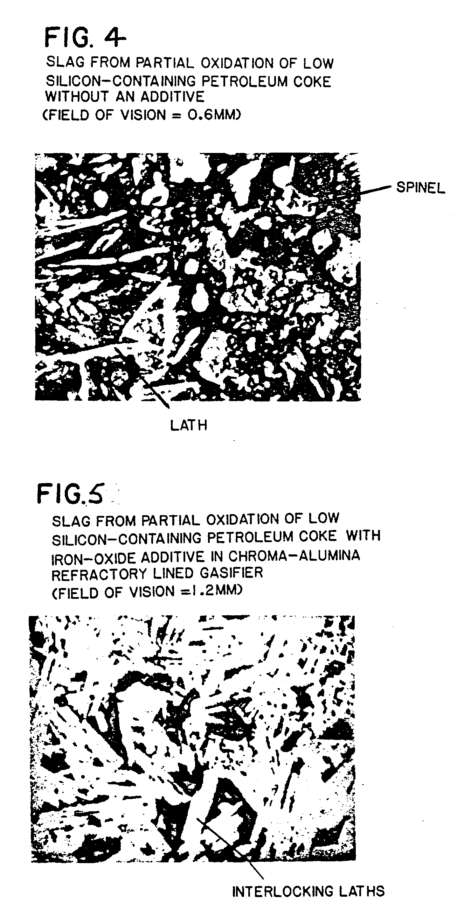

Photomicrographs of cross-sections of typical slags produced from the first and second liquid phase washing agents and illustrating the undissolved vanadium-containing oxide spinels in a matrix of liquid phase washing agents are shown in the drawings for Figures 4 to 6.

The following examples are offered to better understand the present invention. Briefly, Example No. 1 illustrates the problem with removing slag produced by the gasification of low silicon-containing petroleum coke as previously described but without an additive or with an ineffective additive. Example No. 2 illustrates the potential refractory slag problems that might result from the use of the additive with an unsuitable refractory liner. Example No. 3 illustrates Applicant's invention and shows the success of the additive when used with a compatible hot face high MgO refractory liner.

### Example No. 1

Slag produced from partial oxidation of low silicon-containing petroleum coke and without an additive. The drawing for Figure 4 shows abundant laths comprising the oxides of V, Ca and Fe, with spinels selected from the groups consisting of V, Fe, Ni, Al, and mixtures thereof. The slag is very viscous and there is very little melting, which is necessary to remove the slag from the gasifier.

### Example No. 2

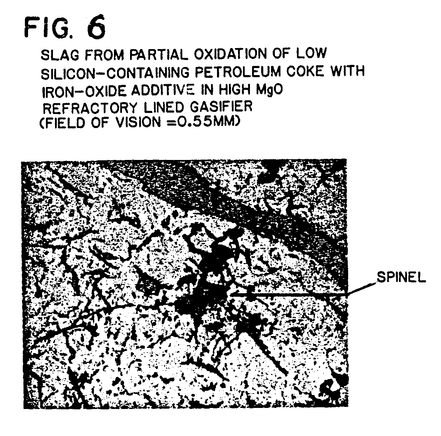

Slag produced from the partial oxidation of low silicon-containing petroleum coke and with an effective calcium moderated iron oxide additive, but with a chromia-alumina refractory. The drawing for Figure 5 shows interlocking laths of Al, Ca, V-oxide phase in a matrix of Al, Ca, Si, Fe-oxide. The high viscosity of the slag, as evident by the presence of interlocking needles, is a result of the severe interaction of the additive with the alumina based refractory.

### Example No. 3

Illustrates Applicant's invention. Slag produced from partial oxidation of low silicon-containing petroleum coke and with iron oxide rich additive and the high MgO refractory as previously described. The drawing for Figure 6 shows the presence of a fluid oxy-sulfide melt with localized spinels rich in Mg, Fe, V. The localized occurrence of the spinels that are formed by the interaction of vanadium and iron with the high MgO refractory (as compared to the interlocking nature of the laths with the alumina rich refractory) will cause no slag removal problems.

The following is a description of a further embodiment of a process according to the invention.

The partial oxidation of heavy liquid hydrocarbonaceous fuel and solid carbonaceous fuel e.g. petroleum coke are described respectively in coassigned U.S. Patent Numbers 4,411,670 and 3,607,156, which are incorporated herein by reference. Further, suitable free-flow unobstructed vertical refractory lined gas generators and burners that may be used in the production of synthesis gas, reducing gas, or fuel gas from these materials are also described in the aforesaid references. Preferably, the vertical cylindrical shaped reaction zone has two coaxial inlet and outlet orifices or passages. These are centrally located in the top and bottom of the reaction zone. Advantageously, the subject process uses relatively inexpensive feedstocks comprising heavy liquid hydrocarbonaceous fuel and/or solid carbonaceous fuel feedstocks having nickel and vanadium-containing ashes. Further, said feedstock includes a minimum of 0.1 wt.% of sulfur, such as at least 2.0 wt.% sulfur; and greater than about 7, such as about 10 parts per million (ppm) to about 70,000 ppm of silicon; say in the range of greater than about 350 ppm to about 10,000 ppm of silicon; and said ash includes a minimum of 2.0 wt.% of vanadium and, a minimum of 1.0 wt.% of nickel, such as 2.0 to 5.0 wt. %.

By definition, the term sulfur-containing heavy liquid hydrocarbonaceous material or fuel having a nickel and vanadium-containing ash is a petroleum or coal derived fuel selected from the group consisting of virgin crude, residua from petroleum distillation and cracking, petroleum distillate, reduced crude, whole crude, asphalt, coal tar, coal derived oil, shale oil, tar sand oil, and mixtures thereof.

By definition, the term sulfur-containing solid carbonaceous fuel having a nickel and vanadium-containing ash is a solid fuel selected from the group consisting of coal, coke from coal, lignite; residue derived from coal liquefaction; oil shale; tar sands; petroleum coke; asphalt; pitch; particulate carbon (soot); and mixtures thereof. The petroleum coke is made from ash-containing heavy liquid hydrocarbonaceous fuel by conventional coking methods such as by the delayed or fluid coking process, such as described in coassigned U.S. Patent No. 3,673,080, which is incorporated herein by reference.

Closer study of the ashes derived from the partial oxidation, without an additive, of a feedstock comprising heavy liquid hydrocarbonaceous fuels and/or solid carbonaceous fuel having nickel and vanadium-containing ashes shows that they are largely composed of oxide and sulfide compounds of vanadium, nickel, iron, silicon, aluminum, and magnesium, along with some normally occurring mineral matter species. Vanadium-containing oxide laths are present and may be selected from the group consisting of V, V+Ca, V+Fe, V+Al, and mixtures thereof. Vanadium-containing spinels are present of the spinel-type aluminate phases and may include any metals selected from the group consisting of V, Fe, Cr, Al, Mg and mixtures thereof. The presence of abundant interlocking needle to lath-like crystals is the cause of the high viscosity of the slag.

Petroleum coke is the preferred solid carbonaceous fuel in the subject process. The amount of vanadium and nickel is significantly greater in petroleum coke than in coal. Accordingly, the metals present in the ash provide a system that is significantly different from that occurring in coal. A further factor is that the total ash content of the petroleum coke or heavy liquid hydrocarbonaceous fuel may be only about one-half to 5 weight percent (wt.%) whereas coal typically contains 10-20 wt.% ash. The comparatively low ash concentration in petroleum coke and heavy liquid carbonaceous fuel may be the reason why the ash removal problem is only noticed after prolonged gasifier runs. The chance for effective ash and additive mixing that is necessary to wash the vanadium constituents out of the reaction zone or for effective fluxing is therefore greatly reduced. It is theorized that in the heavy liquid hydrocarbonaceous material and petroleum coke systems, a good deal of the ash material is liberated as individual molecular species. This is because upon vacuum distillation or coking, the metallic species in the crude, which are generally presented as porphyrin type structures (metal atoms, oxides or ions thereof confined in an organic framework), are entrapped within the collapsed carbon matrix.

Problems arise when the heavy metal constituents build-up in the partial oxidation gasification system. In particular, vanadium and nickel are known to accumulate on the ceiling and walls of the refractory lined reaction zone of the partial oxidation gas generator and not flow smoothly from the gasifier under normal gasifier conditions. This is especially prevalent in the area where the burner discharges through the top dome of the gasifier at the entrance to the down-flowing vertical free-flow unobstructed refractory lined gasification chamber. During shut down and subsequent exposure of the gasifier walls to air, these deposits involving vanadium can catch fire with the vanadium converting to the lower melting V₂O₅ or metal vanadate states. These materials prove to be very corrosive to refractory thereby decreasing the life of the refractory lining of the reaction zone.

The vertical refractory lined free-flow unobstructed gas generator used in the subject process is shown and described in coassigned U.S. Patent No. 4,472,171, which is incorporated herein by reference. It was found that the temperature in the upper region near the top of the vertical, cylindrical-shaped reaction zone when operating in the normal manner was about 56°C to 167°C (100°F to 300°F.) greater than the temperature of 927°C to 1538°C (1700°F to 2800°F.) which prevailed in the rest of the gasifier. This temperature differential contributed to slag sticking and build-up on the walls of the gasifier in the upper region. H₂O is regularly introduced into the reaction zone in the amount so that the weight ratio of H₂O/liquid hydrocarbonaceous fuel and/or solid carbonaceous fuel weight ratio is in the range of about 0.1 to 5.0, such as about 0.2 to 0.9. The H₂O may be introduced as the liquid or gaseous carrier for the solid carbonaceous fuel or the liquid hydrocarbonaceous fuel. It also moderates the exothermic reactions going on in the reaction zone. In the subject process, in addition to the aforesaid amount of H₂O, a supplemental amount of a gaseous slag fluidizing agent is introduced into the reaction zone. By the subject process, a uniform temperature prevails over the entire gasifier. Further, throughout the reaction zone of the gasifier, the temperature does not vary more than ± 83°C (150°F.) Unexpectedly, by means of applicants' invention, a greater amount of sulfur is removed from the reaction zone as a portion of the molten slag, the fluidity of the molten slag is increased, and the inside walls of the entire gasifier are clean and free-from build-up of slag.

The gaseous slag fluidizing agent is selected from the group consisting superheated steam, CO₂ and mixtures thereof. For example, high pressure superheated steam about 20 to 1000 psi may be used. Sufficient gaseous slag fluidizing agent is introduced to the gasifier so as to reduce the temperature in the upper region of the reaction zone near the top of the gas generator about 56°C to 167°C (100°F to 300°F). so as to maintain a uniform temperature throughout the reaction zone in the range of about 1149°C to 1649°C (2100°F to 3000°F) ± 83°C (150°F). For example, the amount of said gaseous slag fluidizing agent that is introduced into the reaction zone may be in the amount of about 1 to 20% of the amount of H₂O introduced into the reaction zone without the introduction of said gaseous slag fluidizing agent. The gaseous slag fluidizing agent is introduced into the reaction zone in at least one of the following ways:
(1) In admixture with said free-oxygen containing gas and/or in admixture with liquid hydrocarbonaceous or solid carbonaceous fuel.
(2) By way of a separate passage in a partial oxidation annular type burner.
(3) By way of at least one injection port which passes through the top dome or the side walls near the top of the vertical refractory lined steel gasifier.

In other embodiments of the subject invention to be further described, an additional amount of a supplemental gaseous material selected from the group consisting of free-oxygen containing gas, H₂S, COS, SO₂ and mixtures thereof is introduced into the reaction zone along with, said gaseous slag fluidizing agent. For example, the supplemental gaseous material may be introduced into the reaction zone as a separate stream or in admixture with one of the other feed streams, such as in admixture with the gaseous slag fluidizing agent.

An iron-containing additive comprising an iron compound, preferably iron oxide, in admixture with the fuel feedstock is introduced into the partial oxidation gas generator. In the reaction zone of the gas generator, a first portion of the iron-containing additive combines with at least a portion, such as substantially all or a large fraction e.g. about 90 to 97 wt. of the nickel and about 30 to 90 wt%, say about 50 to 70 wt. % of the iron and sulfur constituents found in the feedstock to produce a first low viscosity liquid phase washing agent or carrier. Minor amounts e.g. less than about 5 wt. % of the amount present in the feedstock, of other elements from the feedstock may be picked up by the first liquid phase washing agent and dissolved therein. Accordingly, a minor amount of at least one extraneous element selected from the group consisting of Al, Ca, V, Si, Ti, Mg, Mn, Na, K, and mixtures thereof may be present in the first liquid phase washing agent. A second portion of the iron-containing additive combines with at least a portion, such as substantially all or a large fraction e.g. about 40 to 100 wt. %, say about 70 to 90 wt. % of the silicon, aluminum, calcium, sodium and/or potassium, and a portion e.g. 5 to 70 wt. %, of the remainder of the iron constituents found in the feedstock to produce a second liquid phase washing agent. Any remaining iron may go to the vanadium-containing spinel phase. Minor amounts e.g. less than about 5 wt. % of the amount present in the feedstocks, of other elements from the feedstock may be picked up by the second liquid phase washing agent and dissolved therein. Accordingly, a minor amount of at least one extraneous element selected from the group consisting of Ni, V, S, Mg, Cr, and mixtures thereof may be present in the second liquid phase washing agent. Advantageously, by the subject process the S₂ potential in the process gas stream and downstream gas cleaning costs are substantially reduced or possibly eliminated.

The relative proportion of first and second liquid phase washing agents present in the reaction zone depends on the temperature prevailing in the reaction zone and the materials present. An elemental analysis of the first liquid phase washing agent substantially comprises in wt. %: iron about 40 to 80, such as about 60 to 70; nickel about 0.1 to 5, such as about 1 to 10; and sulfur about 10 to 32, such as about 15 to 30. The extraneous elements which may be present in the first liquid phase washing agent in the reaction zone include in wt. % vanadium about 0.1 to 3, such as about 0.2 to 1.0; silicon about 0.01 to 3, such as about 0.5 to 1.5; and aluminum about 0.01 to 3, such as about 0.4 to 1.2. It was unexpectedly found that most of the nickel e.g. 99 wt. % or more goes into the first liquid phase washing agent. An elemental analysis of the second washing agent substantially comprises in wt. %: iron about 5 to 40, such as about 10 to 30; aluminum about 5 to 20, such as about 8 to 12; silicon about 20 to 50, such as about 30 to 40; calcium about 1.0 to 35, such as about 5 to 15; and sodium and/or potassium about 0.01 to 5, such as about 0.5 to 2. The extraneous elements which may be present in the second liquid phase washing agent in the reaction zone include in wt. % vanadium about 0.2 to 5, such as about 0.5 to 2; and sulfur about 0.01 to 1.5, such as about 0.1 to 1.0.

It was unexpectedly found that these liquid phase washing agents have strong wetting capabilities for the high temperature non-flowing vanadium-containing oxide laths and spinels. These washing agents function in a completely different manner than that of a fluxing additive which may be used for example to solubilize slag constituents in coal. For example, these washing agents do not solubilize the troublesome vanadium-containing oxide laths and spinels. Rather, they serve as carriers and wash them out of the reaction zone. These washing agents wash at least a portion, such as from about 80 to 100 wt. %, say about 85 to 95 wt. %, and preferably all of the vanadium-containing contaminants out of the reaction zone of the partial oxidation gas generator. The mixtures of the first and second liquid phase washing agent and vanadium oxide laths and spinels are referred to herein as slag. The vanadium-containing oxide laths and spinels contain (i) substantially all e.g. about 80 to 99 wt. % or a large fraction e.g. about 85 to 95 wt. % of the vanadium present in the feed; (ii) the remainder of the Fe, Al, Mg, Ti, and other minor impurities from the iron-containing additive and/or feedstock; and (iii) refractory components. The vanadium-containing oxide laths and spinels comprise about 1 to 10 wt. %, such as about 4 to 8 wt. % of vanadium oxide.

The first liquid phase washing agent is present in the amount of about 90 to 99.5 wt. %, (basis total weight of first and second washing agents), such as about 92 to 96 wt. %. The second liquid phase washing agent is present in the amount of about 0.5 to 10 wt. % such as about 1 to 2 wt. %. The two liquid phase washing agents are substantially immiscible in each other. For example, the solubility of the first liquid phase washing agent in the second liquid phase washing agent is only about 0.05 to 2.0 wt. %. Actually, with the exception of the vanadium-containing laths and spinels, the first liquid phase washing agent does a better job than the second liquid phase washing agent in washing out of the reaction zone the particulate matter entrained in the hot raw effluent gas stream from the reaction zone. In general, the vanadium-bearing spinels tend to concentrate in the second liquid phase washing agent rather than in the first liquid phase washing agent. In some cases when the amount of the second liquid phase washing agent is less than 10 wt. %, the vanadium-bearing spinels have been so abundant that they actually constitute a more or less continuous mass with the second liquid phase washing agent. It is apparent that the vanadium-bearing spinels form very early in the crystallization sequence. Further, they have very high melting points and the grains composed of major proportions of them are rigid to very viscous at very high temperatures. The first liquid phase washing agent in contrast with the second liquid phase washing agent, have much lower melting points, and much lower viscosities. However, they also contain very much less of the vanadium-containing spinels. For example, the melting point and viscosity of the first liquid phase washing agent are in the range of about 1038°C to 1204°C (1900 to 2200°F), and about 5 to 120 poises respectively; whereas, the melting point and viscosity of the second liquid phase washing agent are in the range of about 1177°C to 1357°C (2150 to 2475°F), and about 100 to 1200 poises, respectively.

The distribution of iron between the first and second liquid phase washing agents is influenced by the equilibrium oxygen and sulfur concentrations in the gas phase in the reaction zone. This is specified by the partial pressures of the oxygen and/or S₂ gas in the reaction zone. The lower the partial pressure of oxygen and/or S₂ gas at a given temperature, the more iron is driven into the first liquid phase washing agent in preference to the second liquid phase washing agent. The formation of elemental iron in the reaction zone leads to difficulties with slag removal. In order to prevent elemental iron for forming, the partial pressure in atmospheres of the oxygen and/or S₂ gas in the reaction zone of the gasifier at a specific temperature is kept slightly above that calculated by Formula I and/or II below.

The relationship between the temperature in the reaction zone T°C, and the common logarithm of the equilibrium partial pressure of free-oxygen gas "log 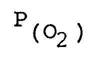
" in atmospheres in the reaction zone is shown by Formula I. When the equilibrium partial pressure of oxygen gas in the reaction zone drops below that calculated in Formula I, then sufficient supplemental free-oxygen containing gas is introduced into the reaction zone to restore the equilibrium partial pressure of the oxygen gas in the reaction zone to a value which is slightly above that calculated in Formula I. Additions of supplemental free-oxygen containing gas in excess of that required to do the job are economically unattractive. Further, they will reduce the efficiency of the process and should be avoided. 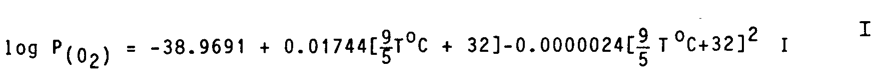
wherein: T is the temperature in the reaction zone and is in the range of about 1149°C to 1649°C (2100°F to 3000°F).

For example, when the temperature in the reaction zone is 1149°C (2100°F), a first value for the equilibrium partial pressure of oxygen in the reaction zone, as determined by Formula I, is about 1.18 x 10⁻¹³ atmospheres. This value for the partial pressure of oxygen gas in the reaction zone is compared with a second value of the partial pressure of oxygen which is determined by conventional calculations for the reactions going on in the reaction zone of the gasifier. When the second value for the partial pressure of oxygen is less than the value calculated from Formula I then sufficient supplemental free-oxygen containing gas e.g. air, oxygen, oxygen-enriched air is introduced into the reaction zone to bring the partial pressure of oxygen to a value which is slightly above 1.18 x 10⁻¹³ atmospheres, such as to about 10⁻¹² atmospheres or above. The term "slightly above" means an increase of about 3%. Over the reaction temperature range of 1149°C to 1649°C (2100 to 3000°F) and an atomic O/C ratio in the range of about 0.6 to 1.6, the equilibrium partial pressure of oxygen in the reaction zone will increase in the range of about 1.18 x 10⁻¹³ to 5.64 x 10⁻⁹ atmospheres.

As previously mentioned, elemental iron may be prevented from forming in the reaction zone of the partial oxidation gas generator by maintaining the partial pressure of S₂ gas in the reaction zone above the value calculated from Formula II below for the specified reaction zone temperature. The relationship between the temperature in the reaction zone (T°C), and the common logarithm of the equilibrium partial pressure of S₂ gas "log 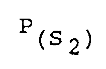
" in atmospheres in the reaction zone is shown in Formula II. When the equilibrium partial pressure of the S₂ gas in the reaction zone drops below that calculated in Formula II, then sufficient supplemental elemental sulfur or a sulfur-containing material is introduced into the reaction zone to bring the equilibrium partial pressure of the S₂ gas in the reaction zone to a value which is slightly above that calculated in Formula II. Additions of supplemental elemental sulfur or sulfur-containing materials in excess of that required to do the job are economically unattractive and should be avoided. Further, costly downstream purification steps for the S₂ gas may be then avoided. 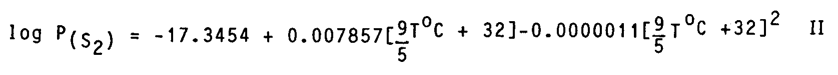
wherein: T is the temperature in the reaction zone is in the range of about 1149°C to 1649°C (2100°F to 3000°F).

For example, when the temperature in the reaction zone is 1149°C (2100°F), the equilibrium partial pressure of S₂ gas in the reaction zone, as determined by Formula II, is about 2 x 10⁻⁶ atmospheres. This value for the partial pressure of S₂ gas in the reaction zone is compared with a second value for the partial pressure of S₂ gas which is determined by conventional calculations for the reactions going on in the reaction zone of the gasifier. When the second value for the partial pressure of S₂ gas is less than the value calculated from Formula II, then sufficient supplemental elemental sulfur or sulfur-containing material e.g. metal sulfides, H₂S, COS, SO₂ are introduced into the reaction zone to restore the equilibrium partial pressure of S₂ gas to a value which is slightly above 2 x 10⁻⁶ atmospheres, such as about 10⁻⁵ atmospheres. The term "slightly above" means an increase of about 3%. Over the reaction temperature range of 1149°C to 1649°C (2100 to 3000°F), the equilibrium partial pressure of sulfur in the reaction zone will increase in the range of about 2 x 10⁻⁶ to 2.12 x 10⁻⁴ atmospheres.

Further, it was unexpectedly found that the additional amount of free-oxygen, over and above that normally supplied to the gas generator as determined for example, by conventional thermal and weight balances may be added to the gasifier without substantially increasing the temperature in the reaction zone. Higher carbon conversions were thereby achieved at substantially the same gasification temperature. The fluidity of the molten slag was maintained, deposition of solid deposits on the gasifier walls was reduced, and the formation of metallic iron was thereby prevented. Preferably, the additional amount of free-oxygen containing gas is such that the equilibrium partial pressure of oxygen in the gas phase, as determined by Formula I, is increased about 1 to 20% over that determined from Formula I without the additional amount of free-oxygen containing gas. The additional amount of free-oxygen containing gas may be introduced into the reaction zone as a separate stream or in admixture with at least one of the following: the original free-oxygen containing gas, the original temperature moderator, the gaseous slag fluidizing agent, and mixtures thereof.

Also, the additional amount of sulfur-containing gas selected from the groups consisting of SO₂, H₂S, COS, and mixtures thereof may be added to the gasifier without substantially increasing the temperature in the reaction zone. Formation of metallic iron may be thereby prevented, the fluidity of the molten slag is maintained, and the deposition of solid deposits on the gasifier walls is reduced. Preferably, the addtional sulfur-containing gas is such that the equilibrium partial pressure of sulfur in the gas phase as determined by Formula II, is increased about 0.1 to 5% over that determined from Formula II without the additional amount of sulfur-containing gas. The additional amount of sulfur-containing gas may be introduced into the reaction zone as a separate stream, or in admixture with the gaseous slag fluidizing agent, and mixtures thereof.

A suitable amount of iron-containing additive is introduced into the reaction zone along with the fuel feedstock in order to satisfy the following two ratios: (i) a wt. ratio of iron-containing additive to ash (noncombustable material) in the reaction zone in the range of about 0.1 - 10.0 to 1.0, such as in the range of about 1-6 to 1; and (ii) at least 2 parts by weight, such as about 10-30, say 20 parts by weight of iron for each part by weight of vanadium. Further, the total atoms of iron in the reaction zone is in the range of about 1.3 to 3.0 times the atoms of sulfur in the fuel plus about 0.5 to 2.0 times the atoms of silicon in the ash.

Advantageously by the subject process, the two washing phases of the molten slag which are produced in the reaction zone have low viscosities in comparison with prior art high viscosity slag. This facilitates slag removal. Further, at shut-down of the gasifier, the inside surfaces of the top dome and refractory walls of the reaction zone are provided clean and with substantially no deposits of slag.

The partial oxidation reaction takes place in a reducing atmosphere under the following conditions: temperature 1149°C to 1649°C (2100°F to 3000°F), such as about 1260°C to 1427°C (2300°F to 2600°F); say about 1496°C to 1552°C (2725°F to 2825°F); pressure - about 2 to 250 atmospheres, H₂O/fuel weight ratio is in the range of about 0.1 to 5.0, such as about 0.2 to 0.9; and atomic ratio of free oxygen to carbon in the fuel (O/C ratio) is in the range of about 0.6 to 1.6, such as about 0.8 to 1.4. About 90 to 99.9 wt. % of the carbon in the fuel is converted into carbon oxides.

The composition of the hot, raw effluent gas stream directly leaving the free-flow unobstructed vertical refractory lined reaction zone of the partial oxidation gas generator is about as follows, in mole percent: H₂ 10 to 70, CO 15 to 57, CO₂ 0.1 to 30, H₂O 0.1 to 20, CH₄ nil to 60, H₂S nil to 0.5, COS nil to 0.05, N₂ nil to 60, and Aᵣ nil to 2.0. Particulate carbon is present in the range of about 0.2 to 20 weight % (basis carbon content in the feed). Ash is present in the range of about 0.5 to 5.0 wt. %, such as about 1.0 to 3.0 wt. % (basis total weight of fuel feed). Depending on the composition after removal of the entrained particulate carbon and ash by quench cooling and/or scrubbing, the gas stream may be employed as synthesis gas, reducing has or fuel gas.

The preferred iron-containing additive for mixing with the heavy liquid hydrocarbonaceous material having a nickel and vanadium-containing ash or petroleum coke having a nickel and vanadium-containing ash is selected from the group consisting of elemental iron; iron compounds including oxides, sulfides, sulfates, carbonates, cyanides, nitrates; and mixtures thereof. In another embodiment, the iron compound is a water sobuble iron salt. In still another embodiment, the iron compound is a ferro or ferri organic compound selected from the group consisting of naphthenates, oxalates, acetates, citrates, benzoates, oleates, tartrates, and mixtures thereof.

In the subject invention the aforesaid mixture of fuel feedstock comprising heavy liquid hydrocarbonaceous fuel having a nickel and vanadium-containing ash and/or the petroleum coke having a nickel and vanadium-containing ash, and the iron-containing additive are introduced into the partial oxidation gasifier. In another embodiment, the iron-containing additive is mixed with the heavy liquid hydrocarbonaceous material having a nickel and vanadium-containing ash and the mixture is then fed into a conventional coking unit to produce petroleum coke. By this means, the finely ground iron-containing additive may be intimately mixed throughout the petroleum coke product. The preferable particle size of the comminuted iron-containing additive and the comminuted petroleum coke is in the range of ASTM E-11 Standard Sieve Designation about 210 microns to 37 microns, or below. The ingredients of the aforesaid mixtures may be separately ground and then mixed together. Alternatively, the ingredients may be wet or dry ground together. Intimate mixing of the solid materials is thereby achieved, and the particle sizes of each of the solid materials in the mixture may be substantially the same. The dry ground mixture may be mixed with water or a liquid hydrocarbonaceous material or both to produce a pumpable slurry having a solids content in the range of about 50-65 wt. %. Alternatively, the solid materials may be wet ground with the liquid slurry medium. Alternatively, the mixture of particulate solids may be entrained in a gaseous medium and then introduced into the gas generator. The gaseous transport medium may be selected from the group consisting of steam, CO₂, N₂, free-oxygen containing gas, recycle synthesis gas, and mixtures thereof.

For example, a mixture comprising a high boiling liquid petroleum i.e. heavy liquid hydrocarbonaceous fuel having a nickel and vanadium-containing ash and the comminuted iron-containing additive at a temperature in the range of about 343°C to 499°C (650°F to 930°F) is introduced into a delayed coking zone, for example, by way of line 33, such as shown and described in coassigned U.S. Patent No. 3,673,080, which is incorporated herein by reference. At a temperature in the range of about 427°C to 479°C (800°F to 895°F) and a pressure in the range of about 20 to 60 psig, uncondensed hydrocarbon effluent vapor and steam are removed overhead and petroleum coke in admixture with iron-containing additive is removed from the bottom of said delayed coking zone.

In another embodiment, a mixture comprising a high boiling liquid petroleum having a nickel and vanadium-containing ash and the comminuted iron-containing additive at a temperature in the range of about 288°C to 399°C (550°F to 750°F) is introduced into a fluidized bed coking zone for example by way of line 31, such as shown and described in U.S. Patent No. 2,709,676, which is incorporated herein by reference. At a temperature in the range of about 538°C to 649°C (1000°F to 1200°F) and a pressure in the range of about 10 to 20 psig, uncondensed hydrocarbon effluent vapor and steam are removed overhead and said petroleum coke is removed from the bottom of said coking zone.

In other embodiments, this invention may be applied to other similar petroleum processes that produce a stream suitable for gasification. Any "bottom of the barrel" process that does not upgrade the bottoms or residue stream to extinction must ultimately produce such a stream. These streams, either liquid or normally solid but pumpable at elevated temperatures, will produce the same gasification problems discussed for coke. Thus, the invention of introducing an iron-containing additive as part of the petroleum processing prior to gasification should, depending on the specific process, produce a feedstock that will be free of the gasification problems mentioned above. Most of these processes employ vacuum distillation as a pretreatment. Accordingly, as described above, the iron-containing addition agent may be mixed with the vacuum distillation feed having a nickel and vanadium-containing ash. The additive will then emerge from the distillation column in the bottoms stream. In turn, the bottoms stream is the feed stream for the upgrading process. This incorporation of the iron-containing additive should not adversely affect these processes, and the iron-containing addition agent should ultimately emerge with the vanadium-rich residue stream from each respective process. In all of these processes, this residue stream should be suitable for gasification by partial oxidation.

In applicants' process, simultaneously with the gasification of the fuel in the reaction zone, at least about 20 wt. % of the sulfur in the fuel reacts with iron and nickel in the reaction zone to produce iron and nickel sulfide particulate matter. The remainder of the sulfur is converted into H₂S and COS which leave the reaction zone in the hot raw effluent gas stream. In one embodiment the H₂S and COS is separated from the effluent gas stream, for example by well-known solvent absorption processes, and recycled to the reaction zone in the gasifier, for example, along with the gaseous slag fluidizing agent. The metal sulfide particulate matter leaves the reaction zone along with the molten slag. When the molten slag drops into a water bath located in the bottom of a quench tank, such as quench water 31 in coassigned U.S. Patent No. 4,328,008, which is incorporated herein by reference, reaction of the metal sulfides with H₂O takes place to produce a gaseous stream comprising H₂S and H₂O. In one embodiment this gaseous stream is recycled to the reaction zone, for example in admixture with said slag fluidizing agent.

Various modifications of the invention as herein before set forth may be made without departing from the spirit and scope thereof, and therefore, only such limitations should be made as are indicated in the appended claims.

## Claims

1. A process for the production of gaseous mixtures comprising H₂+CO by the partial oxidation of the feedstock comprising a heavy liquid hydrocarbonaceous fuel having a nickel and vanadium-containing ash or petroleum coke having a nickel and vanadium-containing ash, or mixtures thereof; and said feedstock includes a minimum of 0.1 wt. % of sulfur, and greater than about 7 parts per million of silicon; and said ash includes a minimum of 2.0 wt. % vanadium, and a minimum of 1.0 wt. % of nickel; said process comprising:
(1) mixing together an iron-containing additive with said feedstock; wherein the weight ratio of iron-containing additive to ash in the reaction zone in (2) is in the range of about 0.1 - 10.0 to 1.0, and there is at least 2 parts by weight of iron for each part by weight of vanadium;
(2) reacting said mixture from (1) at a temperature in the range of 927°C to 1649°C (1700°F to 3000°F) and a pressure in the range of about 5 to 250 atmospheres in a free-flow refractory lined partial oxidation reaction zone with a free-oxygen containing gas in the presence of a temperature moderator and in a reducing atmosphere to produce a hot raw effluent gas stream comprising H₂+CO and entrained molten slag; and where in said reaction zone a first portion of said iron-containing additive combines with at least a portion of the nickel, iron and sulfur constituents found in the feedstock to produce a first liquid phase washing agent which substantially comprises in wt. % iron about 40 to 80, nickel about 0.1 to 5 and sulfur about 10 to 32; a second portion of said iron-containing additive combines with at least a portion of the silicon, aluminum, calcium, sodium and/or potassium, and iron constituents found in the feedstock to produce a second liquid phase washing agent which substantially comprises in wt. % iron about 5 to 40, aluminum about 5 to 20, silicon about 20 to 50, calcium about 1.0 to 35, and sodium and/or potassium about 0.01 to 5; wherein the amount of second liquid phase washing agent in the reaction zone is increased to a value in the range of about 30 to 95 wt. % (basis total weight of first and second liquid phase washing agents) by introducing a supplemental silicon-containing addition agent into the reaction zone, and wherein the first and second liquid phase washing agents collect and transport at least a portion of the vanadium-containing oxide laths and spinels and other ash components and refractory out of the reaction zone; and
(3) separating non-gaseous materials from said hot raw effluent gas stream.

2. A process according to Claim 1 wherein a calcium compound in the amount of about 2.0 to below 8.0 wt. % of said iron-containing addition agent is only introduced into the reaction zone of the partial oxidation reaction zone at start-up to reduce the softening temperature of the iron-containing addition agent, and is then discontinued.

3. A process according to Claim 1 or Claim 2 wherein said supplemental silicon-containing addition agent is selected from the group consisting of oxides and sulfides of silicon; coal; coal ash; tar sand; sand; earth; and mixtures thereof.

4. A process according to any one of Claims 1 - 3 wherein said feedstock is petroleum coke; and provided with the step of introducing coal into the reaction zone as said silicon-containing addition agent and as a portion of the fuel; and wherein coal is introduced into the reaction zone along with said petroleum coke to provide in said reaction zone a weight ratio of coal ash in the range of about 0.1 to 100 for each part by weight of petroleum coke ash.

5. A process according to any one of Claims 1 - 4 provided with the step of introducing sufficient supplemental oxygen-containing material and/or sulfur-containing material into the reaction zone so as to keep the logarithm of the equilibrium partial pressure in atmospheres of oxygen and/or S₂ gas in the reaction zone slightly above that calculated by Formulae I and/or II below; whereby elemental iron is prevented from forming in the reaction zone: 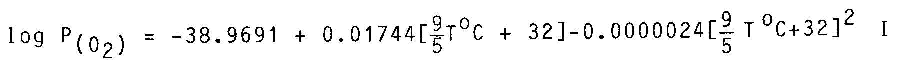 where: log 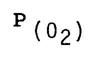 is the logarithm of the equilibrium partial pressure in atmospheres of oxygen in the reaction zone, and T is the temperature in the reaction zone in °C, and 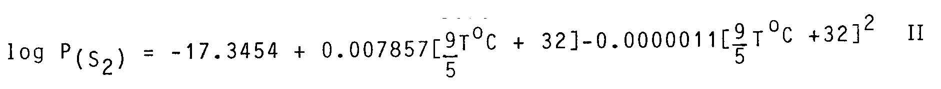 where: log 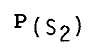 is the logarithm of the equilibrium partial pressure in atmospheres of S₂ gas, in the reaction zone, and T is the temperature in the reaction zone in °C.

6. A process according to any one of Claims 1 - 5 where included in the iron-containing additive in (1) is an additional material selected from the group of elements consisting of magnesium, chromium and mixtures thereof.

7. A process according to Claim 1 wherein said refractory lining comprises in weight percent: MgO 85 to 98; FE₂O₃ 0.03 to 3.0; AL₂O₃ 0.02 to 2.0; CaO 0.1 to 10 and SiO₂ 0.02 to 2.0; and wherein said first and second liquid phase washing agents collect and transport at least a portion of the vanadium-containing oxide laths and spinels and other ash and refractory components out of the reaction zone as said molten slag, and said molten slag combines with a portion of said refractory in the amount of about 0.001 to 2.0 wt. % of the weight of said iron-containing additive to produce localized vanadium-containing spinels and substantially no interlocking laths.

8. A process according to Claim 7 wherein said first liquid phase washing agent substantially comprises in wt. % iron about 40 to 80; nickel about 0.1 to 5; and sulfur about 10 to 32; and optionally a minor amount of at least one element selected from the group consisting of Al, Ca, V, Si, Ti, Mg, Mn, Na, K and mixtures thereof; and said second liquid phase washing agent substantially comprises in wt. %: iron about 5 to 40; magnesium about 0.01 to 2.0; aluminum about 5 to 20; silicon about 20 to 50; calcium about 1.0 to 35; and sodium and/or potassium about 0.01 to 5.

9. A process according to Claim 7 or Claim 8 where included in the iron-containing additive in (1) is an additional material selected from the group of elements consisting of magnesium, manganese and mixtures thereof.

10. A process according to Claim 6 or 9 wherein said additional materials are provided as compounds in the total amount of about 1.0 to 10.0 wt. % of said additive.

11. A process according to any one of Claims 7 - 10 provided with the step of introducing sufficient supplemental oxygen-containing material and/or sulfur-containing material into the reaction zone so as to maintain at a temperature of 1149°C (2100°F) said oxygen and/or sulfur in the gaseous phase in the reaction zone at a partial pressure in atmospheres of 1.18 X 10⁻¹³ and 2 X 10⁻⁶, respectively.

12. A process according to any one of Claims 1 - 11, including the steps of:
(A) coking said mixture from step (1) to produce petroleum coke having a nickel and vanadium-containing ash and having dispersed therein said iron-containing additive;
(B) introducing the petroleum coke from step (A) into the partial oxidation reaction zone in step (2) as a pumpable slurry of petroleum coke in water, liquid hydrocarbonaceous fluid or mixtures thereof, or an substantially dry petroleum coke entrained in a gaseous transport medium.

13. A process according to Claim 12 where in (2) the mixture from (1) at a temperature in the range of about 343°C to 499°C (650°F to 930°F) is introduced into a delayed coking zone where at a temperature in the range of about 426°C to 479°C (800°F to 895°F) and a pressure in the range of about 20 to 60 psig uncondensed hydrocarbon effluent vapor and steam are removed overhead and said petroleum coke having a nickel and vanadium-containing additive is removed from the bottom.

14. A process according to Claim 12 where in (2) the mixture from (1) at a temperature in the range of about 288°C to 399°C (550°F to 750°F) is introduced into a fluidized bed coking zone where at a temperature in the range of about 538°C to 649°C (1000°F to 1200°F) and a pressure in the range of about 10 to 20 psig, uncondensed hydrocarbon effluent vapor and steam are removed overhead and said petroleum coke is removed from the bottom.

15. A process according to Claim 1 or Claim 2 where in step (2) said mixture from (1) is reacted in the presence of a gaseous slag fluidizing agent which is introduced at the top of the reaction zone in a sufficient amount so as to maintain a uniform temperature throughout the reaction zone in the range of about 1149°C to 1649°C (2100°F to 3000°F) and said gaseous slag fluidizing agent is selected from the group consisting of superheated steam, CO₂ and mixtures thereof.

16. A process according to Claim 15 wherein an equilibrium oxygen concentration is provided in the gas phase in the reaction zone with a partial pressure in the range of about 1.18 X 10⁻¹³ to 5.64 X 10⁻⁹ atmospheres, and an equilibrium sulfur concentration is provided in the gas phase in the reaction zone with a partial pressure in the range of about 2 X 10⁻⁶ to 2.12 X 10⁻⁴ atmospheres.

17. A process according to Claim 16 wherein in the reaction zone the free O/C atomic ratio is in the range of about 0.6 to 1.6, the H₂O/liquid hydrocarbonaceous fuel and/or solid carbonaceous fuel weight ratio is in the range of about 0.1 to 5.0, and about 90 to 99.9 wt. % of the carbon in said liquid hydrocarbonaceous fuel and/or solid carbonaceous fuel is converted into carbon oxides.

18. A process according to any one of Claims 15 - 17 including the additional steps of:-
(A) coking said mixture from step (1) by introducing said mixture at a temperature in the range of about 343°C to 499°C (650°F to 930°F) into a delayed coking zone where at a temperature in the range of about 426°C to 479°C (800°F to 895°F) and a pressure in the range of about 20 to 60 psig, uncondensed hydrocarbon effluent vapor and steam are removed overhead and said petroleum coke having a nickel and vanadium-containing ash and having uniformly dispersed therein said iron-containing additive is removed from the bottom;
(B) introducing the petroleum coke from step (A) into the partial oxidation reaction zone in step (2) as a pumpable slurry having a solids content in the range of about 50 to 70 wt. % and comprising petroleum coke in water, liquid hydrocarbonaceous fluid or mixtures thereof; or as substantially dry petroleum coke entrained in a gaseous transport medium.

19. A process according to any one of Claims 15 - 18 wherein said gaseous fluidizing agent in step (2) is introduced into said reaction zone in any one or more of the following ways:
(a) in admixture with said free-oxygen containing gas and/or in admixture with said liquid hydrocarbonaceous or solid carbonaceous fuel;
(b) by way of a separate passage in a partial oxidation annular-type burner; and
(c) by way of at least one injection port passing through the dome or side walls of said gasifier.

20. A process according to any one of Claims 15 - 19 wherein substantially all of the sulfur in said fuel is converted into iron sulfide and nickel sulfide which leave the reaction zone in said molten slag; and the remainder of said sulfur in the fuel is converted into H₂S and COS which leave said reaction zone in said hot raw effluent gas stream; and provided with the steps of separating said H₂S and COS from said effluent gas stream and recycling same to the reaction zone in (2).

21. A process according to any one of Claims 15 - 19 wherein said solid carbonaceous fuel is introduced into said reaction zone as a pumpable slurry entrained in a liquid carrier, or as ground particulate matter entrained in a gaseous carrier.

22. A process according to any one of Claims 1 - 21 wherein said iron-containing additive is selected from the group consisting of elemental iron; iron compounds selected from the group consisting of oxides, sulfides, sulfates, carbonates, cyanides, chlorides and nitrates; and mixtures thereof.

23. A process according to any one of Claims 1 - 22 wherein the iron containing portion of said iron-containing additive is a ferro or ferri organic compound selected from the group consisting of naphthenates, oxalates, acetates, citrates, benzoates, oleates, tartrates and mixtures thereof.

24. A process according to any one of Claims 1 - 23 wherein the iron-containing portion of said iron-containing additive is a water soluble iron salt.

25. A process according to any one of Claims 1 - 24 wherein an additional supplemental gaseous material selected from the group consisting of free-oxygen containing gas, H₂S, COS, SO₂ and mixtures thereof is introduced into the reaction zone.

26. A process according to any one of Claims 1 - 25 wherein said mixture of iron-containing additive and feedstock from (1) has a particle size of ASTM E-11 Standard Sieve Designation in the range of about 210 microns to 37 microns, or below.

27. A process according to any one of Claims 1 - 26 wherein said iron-containing additive comprises about 30.0 to 100.0 wt. % of an iron compound.

28. A process according to any one of Claims 1 - 27 wherein the first liquid phase washing agent is present in the amount of about 90 to 99.5 wt. %, (basis total weight of said first and second liquid phase washing agents).

29. A process according to any one of Claims 1 - 28 wherein a sufficient amount of gaseous slag fluidizing agent is introduced into the reaction zone so as to maintain a uniform temperature throughout the reaction zone of about 1149°C to 1649°C (2100°F to 3000°F) ± 83°C 150°F.

30. A process according to any one of Claims 15 - 21 wherein supplemental free-oxygen containing gas is introduced into the reaction zone; and wherein the amount of said supplemental free-oxygen containing gas is such that the equilibrium partial pressure of oxygen in the gas phase, as determined by Formula I, below, is increased about 1 to 20% over that determined by Formula I without the additional amount of free-oxygen containing gas; 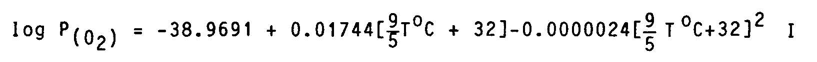 wherein: T is the temperature in the reaction zone and is in the range of about 1149°C to 1649°C (210°F to 3000°F).

31. A process according to any one of Claims 15 - 21 wherein supplemental gaseous material selected from the group of sulfur-containing gases consisting of H₂S, COS, SO₂, and mixtures thereof is introduced into the reaction zone; and wherein the amount of said additional sulfur-containing gas is such that the equilibrium partial pressure of sulfur in the gas phase as determined from Formula II is increased about 0.1 to 5% over that determined from Formula II without the additional amount of said sulfur-containing gas; 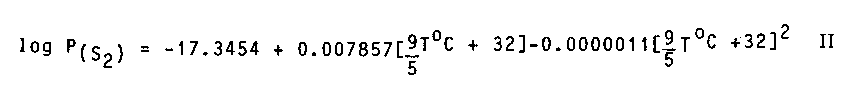 wherein: T is the temperature in the reaction zone and is in the range of about 1149°C to 1649°C (2100°F to 3000°F).

32. A process according to any one of Claims 1 - 31 wherein there is present in said first liquid phase washing agent at least one additional element selected from the group consisting of Al, Ca, V, Si, Ti, Mg, Mn, Na, K and mixtures thereof; and wherein there is present in said second liquid phase washing agent at least one additional element selected from the group consisting of Ni, V, S, Mg, Cr and mixtures thereof.

## Patentansprüche

1. Verfahren zum Erzeugen gasförmiger Mischungen, welche H₂ + CO aufweisen, durch die Teiloxidation des Ausgangsmaterials, welches einen schweren flüssigen kohlenwasserstoffhaltigen Brennstoff mit einer Nickel oder Vanadium enthaltenden Asche oder Petrolkoks mit einer Nickel- oder Vanadium enthaltenden Asche oder Mischungen davon aufweist; und wobei das Ausgangsmaterial ein Minimum von 0,1 Gewichtsprozent an Schwefel und mehr als 7 Teile pro Million an Silizium umfaßt; und wobei die Asche ein Minimum von 2,0 Gewichtsprozent Vanadium und ein Minimum von 1 Gewichtsprozent an Nickel enthält, wobei das Verfahren umfaßt:
(1) das Zusammenmischen eines Eisen enthaltenden Additivs mit dem Ausgangsmaterial; wobei das Gewichtsverhältnis des Eisen enthaltenden Additivs zur Asche im Reaktionsbereich in (2) im Bereich von etwa 0.1 - 10.0 bis 1.0 liegt und es wenigstens 2 Gewichtsteile Eisen für jedes Gewichtsteil Vanadium gibt;
(2) Reagieren der Mischung aus (1) bei einer Temperatur in dem Bereich von 927°C bis 1649°C (1700°F bis 3000°F) und einem Druck in dem Bereich von etwa 5 bis 250 Atmosphären in einem mit feuerfestem Material ausgekleideten Freifluß-Teiloxidations-Reaktionsbereich mit einem freien Sauerstoff enthaltenden Gas in Anwesenheit eines Temperaturmoderators und in einer reduzierenden Atmosphäre, um einen heißen rohen ausströmenden Gasstrom zu erzeugen, der H₂ + CO und mitgerissene geschmolzene Schlacke enthält; und wobei in dem Reaktionsbereich ein erster Teil des Eisen enthaltenden Additivs sich mit wenigstens einem Teil der Nickel-, Eisen- und Schwefelbestandteile verbindet, die in dem Ausgangsmaterial gefunden werden, um ein erstes Waschmittel in flüssiger Phase zu erzeugen, welches im wesentlichen an Gewichtsprozent Eisen etwa 40 bis 80, Nickel etwa 0,1 bis 5 und Schwefel etwa 10 bis 32 aufweist; ein zweiter Teil des Eisen enthaltenden Additivs sich mit wenigstens einem Teil der Silizium-, Aluminium-, Kalzium-, Natrium- und/oder Kalium- und Eisenbestandteile verbindet, die in dem Ausgangsmaterial gefunden werden, um ein zweites Waschmittel in flüssiger Phase zu erzeugen, welches im wesentlichen an Gewichtsprozent Eisen etwa 5 bis 40, Aluminium etwa 5 bis 20, Silizium etwa 20 bis 50, Kalzium etwa 1,0 bis 35 und Natrium und/oder Kalium etwa 0,01 bis 5 aufweist; wobei die Menge an zweitem Waschmittel in flüssiger Phase in dem Reaktionsbereich auf einen Wert in dem Bereich von 30 bis 95 Gewichtsprozent (Basis - Gesamtgewicht an erstem und zweitem Waschmittel in flüssiger Phase) durch Einführen eines zusätzlichen, Silizium enthaltenden Zusatzstoffes in den Reaktionsbereich erhöht wird, und wobei das erste und das zweite Waschmittel in flüssiger Phase wenigstens einen Teil der Vanadium enthaltenden Oxidstäbe und -spinelle und weitere Aschekomponenten und feuerfestes Material auffangen und aus dem Reaktionsbereich hinaustransportieren; und
(3) Abtrennen der nicht gasförmigen Materialien von dem heißen rohen ausströmenden Gasstrom.

2. Verfahren nach Anspruch 1, bei dem eine Kalziumverbindung in der Menge von etwa 2,0 bis unterhalb von 8,0 Gewichtsprozent des Eisen enthaltenden Zusatzstoffes nur in der Startphase in den Reaktionsbereich des Teiloxidations-Reaktionsbereiches eingeführt wird, um die Erweichungstemperatur des Eisen enthaltenden Zusatzstoffes zu erniedrigen, und dann nicht mehr zugeführt wird.

3. Verfahren nach Anspruch 1 oder Anspruch 2, bei dem der zusätzliche Silizium enthaltende Zusatzstoff aus der Gruppe bestehend aus Oxiden und Sulfiden von Silizium; Kohle; Kohleasche; Ölsand; Sand; Erde und Mischungen davon ausgewählt ist.

4. Verfahren nach einem der Ansprüche 1 - 3, bei dem das Ausgangsmaterial Petrolkoks ist und das den Schritt des Einführens von Kohle in den Reaktionsbereich als den Silizium enthaltenden Zusatzstoff und als einen Teil des Brennstoffes aufweist; und wobei Kohle in den Reaktionsbereich zusammen mit dem Petrolkoks eingeführt wird, um in dem Reaktionsbereich ein Gewichtsverhältnis von Kohleasche in dem Bereich von etwa 0,1 bis 100 für jeden Gewichtsteil von Petrolkoksasche zu liefern.

5. Verfahren nach einem der Ansprüche 1 bis 4, versehen mit dem Schritt des Einführens von ausreichend zusätzlichem Sauerstoff enthaltendem material und/oder Schwefel enthaltendem Material in den Reaktionsbereich derart, daß der Logarithmus des Gleichgewicht-Partialdruckes in Atmosphären von Sauerstoff oder S₂-Gas in dem Reaktionsbereich leicht über dem gehalten wird, was durch die unten aufgeführte Formel I oder II berechnet wird; wonach verhindert wird, daß sich elementares Eisen in dem Reaktionsbereich bildet:
${\text{log P}}_{\text{(02)}} \text{= -38,9691 + 0,01744 [} \frac{\text{9}}{\text{5}} \text{T °C + 32] - 0,0000024 [} \frac{\text{9}}{\text{5}} \text{T °C]² I,}$
worin log P(_{O2}) der Logarithmus des Gleichgewichts-Partialdruckes in Atmosphären von Sauerstoff in dem Reaktionsbereich ist, und T die Temperatur in dem Reaktionsbereich in °C ist, und
${\text{log P}}_{\text{(S2)}} \text{= -17,3454 + 0,007857 [} \frac{\text{9}}{\text{5}} \text{T °C + 32] - 0,0000011 [} \frac{\text{9}}{\text{5}} \text{T °C + 32]² II,}$
worin log P_{(S2)} der Logarithmus des Gleichgewichts-Partialdruckes in Atmosphären von S₂- Gas in dem Reaktionsbereich und T die Temperatur in dem Reaktionsbereich in °C ist.

6. Verfahren nach einem der Ansprüche 1 - 5, wobei in dem Eisen enthaltenden Zusatzstoff in (1) ein zusätzliches Material enthalten ist, das aus der Gruppe der Elemente bestehend aus Magnesium, Chrom und Mischungen davon ausgewählt ist.

7. Verfahren nach Anspruch 1, bei dem die Auskleidung mit feuerfestem Material in Gewichtsprozent aufweist: MgO 85 bis 98; Fe₂O₃ 0,03 bis 3,0; Al₂O₃ 0,02 bis 2,0; CaO 0,1 bis 10 und SiO₂ 0,02 bis 2,0; und bei dem das erste und zweite Waschmittel in flüssiger Phase wenigstens eine Teil der Vanadium enthaltenden Oxidstäbe und -spinelle und weitere Asche und Bestandteile des feuerfesten Materials auffangen und als die geschmolzene Schlacke aus dem Reaktionsbereich hinaustransportieren, und die geschmolzene Schlacke sich mit einem Teil des feuerfesten Materials in der Menge von etwa 0,001 bis 2,0 Gewichtsprozent des Gewichtes des Eisen enthaltenden Additivs verbindet, um lokalisierte Vanadium enthaltende Spinelle und im wesentlichen keine ineinandergreifenden Stäbe zu erzeugen.

8. Verfahren nach Anspruch 7, bei dem das erste Waschmittel in flüssiger Phase im wesentlichen in Gewichtsprozent Eisen etwa 40 bis 80; Nickel etwa 0,1 bis 5 und Schwefel etwa 10 bis 32 aufweist; und wahlweise eine geringe Menge wenigstens eines Elementes, das aus der Gruppe bestehend aus Al, Ca, V, Si, Ti, Mg, Mn, Na, K und Mischungen davon ausgewählt ist; und bei dem das zweite Waschmittel in flüssiger Phase im wesentlichen in Gewichtsprozent: Eisen etwa 5 bis 40; Magnesium etwa 0,01 bis 2,0; Aluminium etwa 5 bis 20; Silizium etwa 20 bis 50; Kalzium etwa 1,0 bis 35; und Natrium und/oder Kalium etwa 0,01 bis 5 aufweist.

9. Verfahren nach Anspruch 7 oder Anspruch 8, bei dem in das Eisen enthaltende Additiv in (1) ein zusätzliches Material eingeschlossen ist, das aus der Gruppe der Elemente bestehend aus Magnesium, Mangan und Mischungen davon ausgewählt ist.

10. Verfahren nach Anspruch 6 oder 9, bei dem die zusätzlichen Materialien als Verbindungen in der Gesamtmenge von etwa 1,0 bis 10,0 Gewichtsprozent des Additivs zur Verfügung gestellt werden.

11. Verfahren nach einem der Ansprüche 7 - 10, versehen mit dem Schritt des Einführens von ausreichend ergänzendem Sauerstoff enthaltendem Material und/oder Schwefel enthaltendem Material in den Reaktionsbereich, um den Sauerstoff und/oder Schwefel in der gasförmigen Phase in dem Reaktionsbereich auf der Temperatur von 1149°C [2100°F] bei einem Partialdruck in Atmosphären von 1.18 x 10⁻¹³ bzw. 2 x 10⁻⁶.

12. Verfahren nach einem der Ansprüche 1 - 11, einschließlich der Schritte:
(A) Verkoken der Mischung aus Schritt (1), um Petrolkoks mit Nickel und Vanadium enthaltender Asche und mit darin dispergiertem Eisen enthaltendem Additiv zu erzeugen;
(B) Einführen des Petrolkokses aus Schritt (A) in den Teiloxidations-Reaktionsbereich aus Schritt (2) als einen pumpbaren Schlamm von Petrolkoks in Wasser, flüssiges kohlenwasserstoffhaltiges Fluid oder Mischungen davon, oder einen im wesentlichen trockenen Petrolkoks, mitgerissen in einem gasförmigen Transportmedium.

13. Verfahren nach Anspruch 12, bei dem in (2) die Mischung aus (1) bei einer Temperatur in dem Bereich von etwa 343°C bis 499°C (650°F bis 930°F) in einen verzögerten Verkokungsbereich eingeführt wird, wo bei einer Temperatur in dem Bereich von etwa 426°C bis 479°C (800°F bis 895°F) und einem Druck in dem Bereich von etwa 20 bis 60 psig unkondensierter ausströmender Kohlenwasserstoffrauch und Dampf aus dem oberen Bereich abgeführt werden und der Petrolkoks mit einem Nickel und Vanadium enthaltenden Additiv von dem Boden abgeführt wird.

14. Verfahren nach Anspruch 12, bei dem in (2) die Mischung aus (1) bei einer Temperatur in dem Bereich von etwa 288°C bis 399°C (550°F bis 750°F) in einen Fließbett-Verkokungsbereich eingeführt wird, wo bei einer Temperatur in dem Bereich von etwa 538°C bis 649°C (1000°F bis 1200°F) und einem Druck in dem Bereich von 10 bis 20 psig unkondensierter ausströmender Kohlenwasserstoffrauch und Dampf aus dem oberen Bereich abgeführt werden und der Petrolkoks von dem Boden abgeführt wird.

15. Verfahren nach Anspruch 1 oder Anspruch 2, bei dem in (2) die Mischung aus (1) bei Anwesenheit eines gasförmigen Schlacke fluidisierenden Mittels reagiert wird, das in den oberen Bereich des Reaktionsbereiches in einer ausreichenden Menge eingeführt wird, so daß eine gleichförmige Temperatur über den Reaktionsbereich in dem Bereich von etwa 1149°C bis 1649°C (2100°F bis 3000°F) gehalten wird und wobei das gasförmige Schlacke fluidisierende Mittel aus der Gruppe bestehend aus überhitztem Dampf, CO₂ und Mischungen davon ausgewählt wird.

16. Verfahren nach Anspruch 15, bei dem eine Gleichgewichtskonzentration an Sauerstoff in der Gasphase in dem Reaktionsbereich mit einem Partialdruck in dem Bereich von etwa 1,18 x 10⁻¹³ bis 5,64 x 10⁻⁹ Atmosphären geschaffen wird und eine Gleichgewichtskonzentration an Schwefel in der Gasphase in dem Reaktionsbereich mit einem Partialdruck in dem Bereich von etwa 2 x 10⁻⁶ bis 2,12 x 10⁻⁴ Atmosphären geschaffen wird.

17. Verfahren nach Anspruch 16, bei dem in dem Reaktionsbereich das Atomverhältnis von freiem O/C in dem Bereich von etwa 0,6 bis 1,6 liegt, das Gewichtsverhältnis von H₂O/flüssigem kohlenwasserstoffhaltigem Brennstoff und/oder festem kohlenstoffhaltigem Brennstoff in dem Bereich von etwa 0,1 bis 5,0 liegt und etwa 90 bis 99 Gewichtsprozent des Kohlenstoffes in dem flüssigen kohlenwasserstoffhaltigen Brennstoff und/oder dem festen kohlenstoffhaltigen Brennstoff in Kohlenstoffoxide umgewandelt wird.

18. Verfahren nach einem der Ansprüche 15 - 17, einschließlich der zusätzlichen Schritte:-
(A) Verkoken der Mischung aus Schritt (1) durch Einführen der Mischung bei einer Temperatur in dem Bereich von etwa 343°C bis 499°C (650°F bis 930°F) in einen verzögerten Verkokungsbereich, wo bei einer Temperatur in dem Bereich von etwa 426°C bis 479°C (800°F bis 895°F) und einem Druck in dem Bereich von etwa 20 bis 60 psig unkondensierter ausströmender Kohlenwasserstoffrauch und Dampf aus dem oberen Bereich abgeführt werden und der Petrolkoks mit einer Nickel und Vanadium enthaltenden Asche und mit gleichförmig darin dispergiertem Eisen enthaltenden Additiv von dem Boden abgeführt wird;
(B) Einführen des Petrolkokses aus Schritt (A) in den Teiloxidations-Reaktionsbereich aus Schritt (2) als einen pumpbaren Schlamm mit einem Feststoffgehalt in dem Bereich von etwa 50 bis 70 Gewichtsprozent und Petrolkoks in Wasser, flüssigem kohlenwasserstoffhaltigem Fluid oder Mischungen davon, oder einen im wesentlichen trockenen Petrolkoks, mitgerissen in einem gasförmigen Transportmedium, aufweisend.

19. Verfahren nach einem der Ansprüche 15 - 18, bei dem das gasförmige fluidisierende Mittel in Schritt (2) in den Reaktionsbereich auf irgendeinem der folgenden Wege eingeführt wird:
(a) in Beimengung mit dem freien Sauerstoff enthaltenden Gas und/oder in Beimengung mit dem flüssigen kohlenwasserstoffhaltigen oder festen kohlenstoffhaltigen Brennstoff;
(b) mittels eines separaten Durchlasses in einen Teiloxidationsbrenner vom ringförmigen Typ;
(c) mittels wenigstens einer Einspritzöffnung, die durch den Dom oder die Seitenwände des Vergasers verläuft.

20. Verfahren nach einem der Ansprüche 15 - 19, bei dem im wesentlichen der gesamte Schwefel in dem Brennstoff in Eisensulfid und Nickelsulfid umgewandelt wird, welche den Reaktionsbereich in der geschmolzenen Schlacke verlassen; und der Rest des Schwefels in dem Brennstoff in H₂S und COS umgewandelt wird, welche den Reaktionsbereich in dem heißen rohen ausströmenden Gasstrom verlassen; und versehen mit den Schritten des Abtrennens des H₂S und COS aus dem ausströmenden Gasstrom und deren Rückführen in den Reaktionsbereich in (2).

21. Verfahren nach einem der Ansprüche 15 - 19, bei dem der feste kohlenstoffhaltige Brennstoff in den Reaktionsbereich als ein pumpbarer Schlamm, mitgerissen in einem flüssigen Träger, oder als gemahlene, aus Teilchen bestehende Materie, mitgerissen in einem gasförmigen Träger, eingeführt wird.

22. Verfahren nach einem der Ansprüche 1 - 21, bei dem das Eisen enthaltende Additiv aus der Gruppe bestehend aus elementarem Eisen; Eisenverbindungen ausgewählt aus der Gruppe bestehend aus Oxiden, Sulfiden, Sulfaten, Carbonaten, Cyaniden, Chloriden und Nitraten; und Mischungen davon ausgewählt wird.

23. Verfahren nach einem der Ansprüche 1 - 22, bei dem der Eisen enthaltende Anteil des Eisen enthaltenden Additivs eine organische Ferro- oder Ferriverbindung ist, ausgewählt aus der Gruppe bestehend aus Naphthenaten, Oxalaten, Azetaten, Citraten, Benzoaten, Oleaten, Tartraten und Mischungen davon.

24. Verfahren nach einem der Ansprüche 1 - 23, bei dem der Eisen enthaltende Anteil des Eisen enthaltenden Additivs ein wasserlösliches Eisensalz ist.

25. Verfahren nach einem der Ansprüche 1 - 24, bei dem ein zusätzliches gasförmiges Zusatzmaterial, ausgewählt aus der Gruppe bestehend aus freien Sauerstoff enthaltendem Gas, H₂S, COS, SO₂ und Mischungen davon, in den Reaktionsbereich eingeführt wird.

26. Verfahren nach einem der Ansprüche 1 - 25, bei dem die Mischung aus Eisen enthaltendem Additiv und Ausgangsmaterial aus (1) eine Teilchengröße nach ASTM E-11 - Standardsieb-Bezeichnung in dem Bereich von etwa 210 Mikron bis 37 Mikron oder darunter hat.

27. Verfahren nach einem der Ansprüche 1 - 26, bei dem das Eisen enthaltende Additiv etwa 30,0 bis 100,0 Gewichtsprozent einer Eisenverbindung enthält.

28. Verfahren nach einem der Ansprüche 1 - 27, bei dem das erste Waschmittel in flüssiger Phase in der Menge von etwa 90 bis 99,5 Gewichtsprozent vorliegt (Basis - Gesamtgewicht des ersten und zweiten Waschmittels in flüssiger Phase.

29. Verfahren nach einem der Ansprüche 1 - 28, bei dem eine ausreichende Menge gasförmiges Schlacke fluidisierendes Mittel in den Reaktionsbereich eingeführt wird, um eine gleichförmige Temperatur über den Reaktionsbereich von etwa 1149°C bis 1649°C (2100°F bis 3000°F) ± 83°C (150°F) aufrechtzuerhalten.

30. Verfahren nach einem der Ansprüche 15 bis 21, bei dem zusätzliches freien Sauerstoff enthaltendes Gas in den Reaktionsbereich eingeführt wird; und bei dem die Menge an dem zusätzlichen freien Sauerstoff enthaltenden Gas derart ist, daß der Gleichgewichts-Partialdruck von Sauerstoff in der Gasphase, wenn durch die Formel I bestimmt, die unten angegeben ist, um 1 bis 20% über den erhöht wird, der durch Formel I ohne die zusätzliche Menge an freien Sauerstoff enthaltendem Gas bestimmt ist;
${\text{log P}}_{\text{(02)}} \text{= -38,9691 + 0,01744 [} \frac{\text{9}}{\text{5}} \text{T °C + 32] - 0,0000024 [} \frac{\text{9}}{\text{5}} \text{T °C]² I,}$
worin: T die Temperatur in dem Reaktionsbereich ist und in dem Bereich von etwa 1149°C bis 1649°C (2100°F bis 3000°F) liegt.

31. Verfahren nach einem der Ansprüche 15 - 21, bei dem zusätzliches gasförmiges Material, ausgewählt aus der Gruppe Schwefel enthaltender Gase bestehend aus H₂S, COS, SO₂ und Mischungen davon, in den Reaktionsbereich eingeführt wird; und bei dem die Menge an zusätzlichem Schwefel enthaltendem Gas derart ist, daß der Gleichgewichts-Partialdruck von Schwefel in der Gasphase, wenn aus Formel II bestimmt, um etwa 0,1 bis 5% über den erhöht wird, der durch Formel II ohne die zusätzliche Menge an Schwefel enthaltendem Gas bestimmt ist;
${\text{log P}}_{\text{(S2)}} \text{= -17,3454 + 0,007857 [} \frac{\text{9}}{\text{5}} \text{T °C + 32] - 0,0000011 [} \frac{\text{9}}{\text{5}} \text{T °C + 32]² II,}$
worin: T die Temperatur in dem Reaktionsbereich ist und in dem Bereich von etwa 1149°C bis 1649°C (2100°F bis 3000°F) liegt.

32. Verfahren nach einem der Ansprüche 1 - 31, bei dem in dem ersten Waschmittel in flüssiger Phase wenigstens ein zusätzliches Element vorliegt, das aus der Gruppe bestehend aus Al, Ca, V, Si, Ti, Mg, Mn, Na, K und Mischungen davon ausgewählt ist; und bei dem in dem zweiten Waschmittel in flüssiger Phase wenigstens ein zusätzliches Element vorliegt, das aus der Gruppe bestehend aus Ni, V, S, Mg, Cr und Mischungen davon ausgewählt ist.

## Revendications

1. Procédé pour la production de mélanges gazeux comportant H₂+CO par l'oxydation partielle de la matière première d'alimentation comportant un combustible hydrocarboné liquide dense ayant des cendres contenant du nickel et du vanadium ou du coke de pétrole ayant des cendres contenant du nickel et du vanadium ou leurs mélanges; et ladite matière première d'alimentation comprend un minimum de 0,1% pondéral de soufre, et plus qu'environ 7 parts par million de silicium; et lesdites cendres comprennent un minimum de 2,0% pondéraux de vanadium et un minimum de 1,0% pondéral de nickel; ledit procédé comportant :
(1) le mélange d'un additif contenant du fer avec ladite matière première d'alimentation; dans lequel cas le rapport pondéral de l'additif contenant du fer sur les cendres dans la zone de réaction en (2) est de l'ordre d'environ 0,1 - 10,0 pour 1,0 et il y au moins 2 parts pondérales de fer pour chaque part pondérale de vanadium;
(2) la réaction dudit mélange issu de (1) à une température de l'ordre de 927°C à 1649°C (1700°F à 3000°F) et sous une pression de l'ordre d'environ 5 à 250 atmosphères dans une zone de réaction d'oxydation partielle à flux libre et ayant un revêtement intérieur réfractaire, avec un gaz contenant de l'oxygène libre en présence d' un modérateur de température et dans une atmosphère réductrice pour produire un courant gazeux effluent brut chaud comportant H₂+CO et un laitier fondu entraîné; et où, dans ladite zone de réaction, une première portion dudit additif contenant du fer se combine avec au moins une portion des constituants contenant du nickel, du fer et du soufre présents dans la matière première d'alimentation pour produire un premier agent de lavage de phase liquide qui comprend essentiellement du fer pour environ 40 à 80% pondéraux, du nickel pour environ 0,1 à 5% et du soufre pour environ 10 à 32%; une seconde portion dudit additif contenant du fer se combine avec au moins une portion des constituants contenant du silicium, de l'aluminium, du calcium, du sodium et/ou du potassium et du fer, présents dans la matière première d'alimentation, pour produire un second agent de lavage de phase liquide qui comprend essentiellement du fer pour environ 5 à 40% pondéraux, de l'aluminium pour environ 5 à 20%, du silicium pour environ 20 à 50%, du calcium pour environ 1,0 à 35%, et du sodium et/ou du potassium pour environ 0,01 à 5%; dans lequel cas la quantité du second agent de lavage de phase liquide dans la zone de réaction est augmentée jusqu'à une valeur de l'ordre d'environ 30 à 95% pondéraux (poids total de base des premier et second agents de lavage de phase liquide), en introduisant un additif supplémentaire contenant du silicium dans la zone de réaction, et dans lequel cas le premier et le second agents de lavage de phase liquide rassemblent et transportent au moins une portion des lamelles et spinelles d'oxyde contenant du vanadium et autres composants des cendres et produits réfractaires hors de la zone de réaction; et
(3) la séparation des substances non gazeuses dudit courant gazeux effluent brut chaud.

2. Procédé selon la revendication 1, dans lequel un composé contenant du calcium est, dans une quantité d'environ 2,0 à moins de 8,0% pondéraux dudit additif contenant du fer, introduit seulement au démarrage dans la zone réactionnelle de la zone de réaction d'oxydation partielle, pour réduire la température de ramollissement de l'additif contenant du fer et est ensuite interrompu.

3. Procédé selon la revendication 1 ou la revendication 2, dans lequel ledit additif supplémentaire contenant du silicium est sélectionné parmi le groupe constitué d'oxydes et de sulfures de silicium; de houille; de cendres de houille; de sable bitumeux; de sable; de terre; et de leurs mélanges.

4. Procédé selon l'une quelconque des revendications 1 à 3, dans lequel ladite matière première d'alimentation est du coke de pétrole; et comprenant l'étape d'introduction de houille dans la zone de réaction en tant que dit additif contenant du silicium et en tant que portion du combustible; et dans lequel la houille est introduite dans la zone de réaction en même temps que ledit coke de pétrole pour fournir dans ladite zone de réaction un rapport pondéral de cendres de houille de l'ordre d'environ 0,1 à 100 pour chaque part pondérale des cendres de coke de pétrole.

5. Procédé selon l'une quelconque des revendications 1 à 4, comprenant l'étape de l'introduction supplémentaire de suffisamment de substance contenant de l'oxygène et/ou de substance contenant du soufre dans la zone de réaction, de sorte que l'on maintienne le logarithme de la pression partielle à l'équilibre en atmosphères d'oxygène et/ou de gaz S₂, dans la zone de réaction, légèrement supérieur à celui calculé par les formules I et/ou II ci-dessous; empêchant de ce fait du fer élémentaire de se former dans la zone de réaction :
${\text{log P}}_{\text{(O2)}} \text{= -38,9691 + 0,01744 [9/5 T°C + 32]-0,0000024 [9/5 T°C + 32]² I}$
dans lequel log P_{(O2)} est le logarithme de la pression partielle à l'équilibre en atmosphères d'oxygène dans la zone de réaction et T est la température dans la zone de réaction, en °C, et ${\text{log P}}_{\text{(S2)}} \text{= -17,3454 + 0,007857 [9/5 T°C + 32]-0,0000011 [9/5 T°C + 32]² II}$ 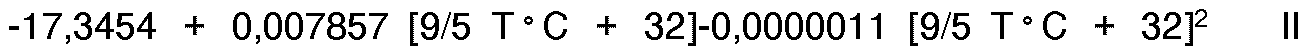 dans lequel log P_{(S2)} est le logarithme de la pression partielle à l'équilibre eu atmosphères de gaz S₂ dans la zone de réaction et T est la température dans la zone de réaction, en °C.

6. Procédé selon l'une quelconque des revendications 1 à 5, dans lequel l'additif contenant du fer en (1) comprend une substance additionnelle, choisie dans le groupe d'éléments composés de magnésium, de chrome et de leurs mélanges.

7. Procédé selon la revendication 1, dans lequel ledit revêtement intérieur réfractaire comprend en pourcentage pondéral : MgO 85 à 98; Fe₂O₃ 0,03 à 3,0; Al₂O₃ 0,02 à 2,0; CaO 0,1 à 10 et SiO₂ 0,02 à 2,0; et dans lequel lesdits premier et second agents de lavage de phase liquide rassemblent et transportent au moins une portion des lamelles et spinelles d'oxyde contenant du vanadium et autres composants des cendres et composants réfractaires hors de la zone de réaction en tant que dit laitier fondu, et ledit laitier fondu se combine avec une portion dudit produit réfractaire dans une quantité d'environ 0,001 à 2,0% pondéraux du poids dudit additif contenant du fer pour produire des spinelles localisés contenant du vanadium et pratiquement pas de lamelles enchevêtrées.

8. Procédé selon la revendication 7, dans lequel ledit premier agent de lavage de phase liquide comprend essentiellement du fer pour environ 40 à 80% pondéraux; du nickel pour environ 0,1 à 5%; et du soufre pour environ 10 à 32%; et de façon optionnelle, une faible quantité d'au moins un élément sélectionné parmi le groupe composé de Al, Ca, V, Si, Ti, Mg, Mn, Na, K et de leurs mélanges; et ledit second agent de lavage de phase liquide comprend essentiellement du fer pour environ 5 à 40% pondéraux, du magnésium pour environ 0,01 à 2,0%; de l'aluminium pour environ 5 à 20%, du silicium pour environ 20 à 50%, du calcium pour environ 1,0 à 35%, et du sodium et/ou du potassium pour environ 0,01 à 5%.

9. Procédé selon la revendication 7 ou la revendication 8, dans lequel l'additif contenant du fer en (1) comprend une substance additionnelle, choisie dans le groupe d'éléments composés de magnésium, de manganèse et de leurs mélanges.

10. Procédé selon la revendication 6 ou 9, dans lequel lesdites substances additionnelles sont fournies en tant que composés dans une quantité totale d'environ 1,0 à 10,0% pondéraux dudit additif.

11. Procédé selon l'une quelconque des revendications 7 à 10, comprenant l'étape de l'introduction supplémentaire de suffisamment de substance contenant de l'oxygène et/ou de substance contenant du soufre dans la zone de réaction afin de maintenir à une température de 1149°C (2100°F) ledit oxygène et/ou soufre, dans la phase gazeuse de la zone de réaction, à une pression partielle en atmosphères de respectivement 1,18 × 10⁻¹³ et 2 × 10⁻⁶.

12. Procédé selon l'une quelconque des revendications 1 à 11, comprenant les étapes :
(A) de cokéfaction dudit mélange issu de l'étape (1) pour produire du coke de pétrole ayant des cendres contenant du nickel et du vanadium et contenant en dispersion ledit additif contenant du fer;
(B) d'introduction du coke de pétrole issu de l'étape (A) dans la zone de réaction d'oxydation partielle dans l'étape (2) sous forme d'une bouillie pompable de coke de pétrole dans de l'eau, de fluide liquide hydrocarboné ou de leurs mélanges, ou un coke de pétrole essentiellement sec entraîné dans un transporteur gazeux.

13. Procédé selon la revendication 12 dans lequel, en (2), le mélange issu de (1) est introduit, à une température de l'ordre d'environ 343°C à 499°C (650°F à 930°F), dans une zone de cokéfaction retardée dans laquelle, à une température de l'ordre d'environ 426°C à 479°C (800°F à 895°F) et sous une pression de l'ordre d'environ 20 à 60 psig, la vapeur d'eau et les vapeurs effluentes hydrocarburées non condensées sont évacuées par le haut et ledit coke de pétrole ayant un additif contenant du nickel et du vanadium est évacué par le fond.

14. Procédé selon la revendication 12 dans lequel, en (2), le mélange issu de (1) est introduit, à une température de l'ordre d'environ 288°C à 399°C (550°F à 750°F), dans une zone de cokéfaction en lit fluidisé dans laquelle, à une température de l'ordre d'environ 538°C à 649°C (1000°F à 1200°F) et sous une pression de l'ordre d'environ 10 à 20 psig, la vapeur d'eau et les vapeurs effluentes hydrocarburées non condensées sont évacuées par le haut et ledit coke de pétrole est évacué par le fond.

15. Procédé selon la revendication 1 ou la revendication 2 dans lequel, à l'étape (2), ledit mélange issu de (1) est mis en réaction en présence d'un agent gazeux de fluidification du laitier qui est introduit au sommet de la zone de réaction dans une quantité suffisante pour maintenir une température uniforme à travers toute la zone de réaction de l'ordre d'environ 1149°C à 1649°C (2100°F à 3000°F) et ledit agent gazeux de fluidification du laitier est sélectionné parmi le groupe constitué de vapeur d'eau surchauffée, de CO₂ et de leurs mélanges.

16. Procédé selon la revendication 15, dans lequel une concentration d'oxygène à l'équilibre est fournie à une pression partielle de l'ordre d'environ 1,18 × 10⁻¹³ à 5,64 × 10⁻⁹ atmosphères, dans la phase gazeuse dans la zone de réaction, et une concentration de soufre à l'équilibre est fournie à une pression partielle de l'ordre d'environ 2 × 10⁻⁶ à 2,12 × 10⁻⁴ atmosphères, dans la phase gazeuse dans la zone de réaction.

17. Procédé selon la revendication 16, dans lequel, dans la zone de réaction, le rapport atomique O libre/C est de l'ordre d'environ 0,6 à 1,6, la proportion pondérale de H₂O/combustible hydrocarboné liquide et/ou de combustible carboné solide est de l'ordre d'environ 0,1 à 5,0, et environ 90 à 99,9% pondéraux du carbone dans ledit combustible hydrocarboné liquide et/ou de combustible carboné solide sont transformés en oxydes de carbone.

18. Procédé selon l'une quelconque des revendications 15 à 17, comprenant les étapes additionnelles:
(A) de cokéfaction dudit mélange issu de l'étape (1) en introduisant ledit mélange, à une température de l'ordre d'environ 343°C à 499°C (650°F à 930°F), dans une zone de cokéfaction retardée dans laquelle, à une température de l'ordre d'environ 426°C à 479°C (800°F à 895°F) et sous une pression de l'ordre d'environ 20 à 60 psig, la vapeur d'eau et les vapeurs effluentes hydrocarburées non condensées sont évacuées par le haut et ledit coke de pétrole ayant des cendres contenant du nickel et du vanadium et ayant ledit additif contenant du fer uniformément dispersé, est évacué par le fond;
(B) d'introduction du coke de pétrole issu de l'étape (A) dans la zone de réaction d'oxydation partielle à l'étape (2) sous forme d'une bouillie pompable ayant une teneur en matières sèches de l'ordre d'environ 50 à 70% pondéraux et comprenant du coke de pétrole dans de l'eau, un fluide liquide hydrocarboné ou leurs mélanges, ou un coke de pétrole essentiellement sec entraîné dans un transporteur gazeux.

19. Procédé selon l'une quelconque des revendications 15 à 18, dans lequel ledit agent gazeux de fluidification à l'étape (2) est introduit dans ladite zone de réaction selon l'une quelconque ou plusieurs des manières suivantes :
(a) en mélange avec ledit gaz contenant de l'oxygène libre et/ou en mélange avec ledit combustible hydrocarboné liquide ou carboné solide;
(b) au moyen d'un passage séparé dans un brûleur de type annulaire pour oxydation partielle; et
(c) au moyen d'au moins un orifice d'injection passant à travers la calotte ou les parois latérales dudit gazéificateur.

20. Procédé selon l'une quelconque des revendications 15 à 19, dans lequel pratiquement tout le soufre contenu dans ledit combustible est transformé en sulfure de fer et sulfure de nickel qui quittent la zone de réaction dans ledit laitier fondu; et le reste dudit soufre dans le combustible est transformé en H₂S et COS qui quittent ladite zone de réaction dans ledit courant gazeux effluent brut chaud; et comprenant les étapes de séparation desdits H₂S et du COS dudit courant gazeux effluent et de recyclage des mêmes éléments vers la zone de réaction en (2).

21. Procédé selon l'une quelconque des revendications 15 à 19, dans lequel ledit combustible carboné solide est introduit dans ladite zone de réaction en tant que bouillie pompable entraînée dans un transporteur liquide, ou en tant que matière particulaire broyée entraînée dans un transporteur gazeux.

22. Procédé selon l'une quelconque des revendications 1 à 21, dans lequel ledit additif contenant du fer est sélectionné parmi le groupe composé de fer élémentaire; les composés de fer étant sélectionnés parmi le groupe composé d'oxydes, de sulfures, de sulfates, de carbonates, de cyanures, de chlorures et de nitrates; et de leurs mélanges.

23. Procédé selon l'une quelconque des revendications 1 à 22, dans lequel la portion contenant du fer dudit additif contenant du fer est un composé organique ferreux ou ferrique, sélectionné parmi le groupe composé de naphténates, d'oxalates, d'acétates, de citrates, de benzoates, d'oléates, de tartrates et de leurs mélanges.

24. Procédé selon l'une quelconque des revendications 1 à 23, dans lequel la portion contenant du fer dudit additif contenant du fer est un sel de fer soluble dans l'eau.

25. Procédé selon l'une quelconque des revendications 1 à 24, dans lequel une substance additionnelle supplémentaire gazeuse sélectionnée parmi le groupe composé de gaz contenant de l'oxygène libre, du H₂S, du COS, du SO₂ et leurs mélanges est introduite dans la zone de réaction.

26. Procédé selon l'une quelconque des revendications 1 à 25, dans lequel ledit mélange d'additif contenant du fer et de matière première d'alimentation issu de (1) a une granulométrie selon l'ASTM E-11 Standard Sieve Designation (Indice des normes ASTM E-11 de la désignation des tamis) de l'ordre d'environ 210 microns à 37 microns ou moins.

27. Procédé selon l'une quelconque des revendications 1 à 26, dans lequel ledit additif contenant du fer comprend environ 30,0 à 100,0% pondéraux d'un composé de fer.

28. Procédé selon l'une quelconque des revendications 1 à 27, dans lequel le premier agent de lavage de phase liquide est présent dans une quantité pondérale d'environ 90 à 99,5% (poids total de base desdits premier et second agents de lavage de phase liquide).

29. Procédé selon l'une quelconque des revendications 1 à 28, dans lequel une quantité suffisante d'agent gazeux de fluidification du laitier est introduit dans la zone de réaction pour maintenir une température uniforme à travers toute la zone de réaction d'environ 1149°C à 1649°C (2100°F à 3000°F) ± 83°C (150°F).

30. Procédé selon l'une quelconque des revendications 15 à 21, dans lequel un gaz supplémentaire contenant de l'oxygène libre est introduit dans la zone de réaction; et dans lequel la quantité dudit gaz supplémentaire contenant de l'oxygène libre est telle que la pression partielle d'oxygène à l'équilibre dans la phase gazeuse, telle que déterminée par la formule I ci-dessous, est accrue d'environ 1 à 20% au-dessus de celle déterminée par la formule I en l'absence de la quantité additionnelle de gaz contenant de l'oxygène libre;
${\text{log P}}_{\text{(O2)}} \text{= -38,9691 + 0,01744 [9/5 T°C + 32]-0,0000024 [9/5 T°C + 32]² I}$
dans lequel T est la température dans la zone de réaction et est de l'ordre d'environ 1149°C à 1649°C (2100°F à 3000°F).

31. Procédé selon l'une quelconque des revendications 15 à 21, dans lequel une substance supplémentaire gazeuse sélectionnée parmi le groupe composé de gaz contenant du soufre comprenant du H₂S, du COS, du SO₂ et leurs mélanges est introduite dans la zone de réaction; et dans lequel la quantité dudit gaz additionnel contenant du soufre est telle que la pression partielle de soufre à l'équilibre dans la phase gazeuse, telle que déterminée par la formule II, est accrue d'environ 0,1 à 5% au-dessus de celle déterminée par la formule II en l'absence de la quantité additionnelle dudit gaz contenant du soufre;
${\text{log P}}_{\text{(S2)}} \text{= -17,3454 + 0,007857 [9/5 T°C + 32]-0,0000011 [9/5 T°C + 32]² II}$
dans lequel T est la température dans la zone de réaction et est de l'ordre d'environ 1149°C à 1649°C (2100°F à 3000°F).

32. Procédé selon l'une quelconque des revendications 1 à 31, dans lequel est présent dans ledit premier agent de lavage de phase liquide au moins un élément additionnel sélectionné parmi le groupe composé de Al, Ca, V, Si, Ti, Mg, Mn, Na, K et de leurs mélanges; et dans lequel est présent dans ledit second agent de lavage de phase liquide au moins un élément additionnel sélectionné parmi le groupe composé de Ni, V, S, Mg, Cr et de leurs mélanges.
